# EUROPEAN PATENT APPLICATION

(11) **EP 4 227 010 A1**
(43) Date of publication of application: **16.08.2023**
(21) Application number: 21877436.2
(22) Date of filing: 29.09.2021
(51) Int. Cl.: B05D 1/18, B05D 3/00, H01G 13/00

(54) **POSITIONING JIG ASSEMBLY, POSITIONING JIG, POSITIONING METHOD FOR ELECTRONIC COMPONENT BODY, AND METHOD FOR MOUNTING SAME TO TRANSPORT JIG**

(30) Priority: 05.10.2020 JP 2020168460; 23.12.2020 JP 2020214042; 31.03.2021 JP 2021059725
(71) Applicant: Creative Coatings Co., Ltd., Tokyo, 113-0023 (JP)
(72) Inventor: SATO, Eiji, Tokyo 162-0842 (JP); SAKAMOTO, Hitoshi, Tokyo 162-0842 (JP)
(74) Representative: Wunderlich & Heim Patentanwälte Partnerschaftsgesellschaft mbB
(86) International application number: PCT/JP2021/035788
(87) International publication number: WO 2022/075135

(57) **Abstract**

A positioning jig assembly (50) includes a positioning main body (60) with a plurality of holes (63) into which, by being elastically deformed, a plurality of electronic component bodies (10) are respectively press-fit, a first guide body (70) and a second guide body (80) disposed to be superimposed on the positioning main body in a planar view from a first direction Z. A plurality of first through-holes (71) are formed in the first guide body (70). A plurality of second through-holes (81) formed in the second guide body (80) are formed in a shape for guiding the electronic component main body (10) on the second guide body to the first through-hole (71). The first through-hole (71) is formed in a shape for provisionally positioning the electronic component main body (10). When height in the first direction of the plurality of electronic component main bodies held by the positioning main body is represented as H, lengths of the first through-hole 71 and the second through-hole (81) are respectively represented as L1 and L2, and depth of the hole (63) is represented as D, L1<H<D+L1+L2 and D<H hold.

## Description

### TECHNICAL FIELD

The present invention relates to a positioning jig assembly and a positioning jig, a positioning method for an electronic component main body and an attaching method to a conveying jig, and the like.

### BACKGROUND ART

The present inventors have proposed an apparatus and a method for immersion-coating an end portion of an electronic component such as a laminated ceramic capacitor, an inductor, or a thermistor with paste, for example, conductive paste, forming an external electrode in an electronic component main body, and manufacturing the electronic component (Patent Documents 1 and 2).

A conventional paste coating apparatus includes, for example, a plurality of holes along orthogonal two axes on a two-dimensional surface on a rubber plate and coats a large number of electronic components with paste at a time using a jig for fitting and supporting an electronic component main body in the holes (Patent Document 2).

### RELATED-ART DOCUMENT

### PATENT DOCUMENT

Patent Document 1: JP-A-2002-237403
Patent Document 2: JP-A-2016-100459

### SUMMARY OF THE INVENTION

### TECHNICAL PROBLEM

In recent years, the electronic component main body of this type has been miniaturized and there has been a problem in manually performing work for attaching the electronic component main body to the jig. When performing automation, it has been requested to efficiently and reliably inserting the electronic component main bodies into a large number of holes.

An object of the present invention is to provide a positioning jig assembly and a positioning jig and a positioning method for an electronic component main body and an attaching method for a conveying jig suitable for automation of work for positioning and holding a plurality of electronic component main bodies in a plurality of holes.

### SOLUTION TO PROBLEM

(1) In accordance with one of some aspects, there is provided a positioning jig assembly comprising:
   a positioning main body with a plurality of holes opened on a first surface of the positioning main body, the plurality of holes elastically deformed to be capable of respectively positioning and holding a plurality of electronic component bodies to be press-fit;
   a first guide body disposed to be superimposed on the positioning main body in a planar view from a first direction orthogonal to the first surface and including a plurality of first through-holes piercing through the first guide body in the first direction; and
   a second guide body disposed to be superimposed on the first guide body in the planar view and including a plurality of second through-holes piercing through the second guide body in the first direction, wherein
   each one of the plurality of holes, each one of the plurality of first through-holes, and each one of the plurality of second through-holes overlap one another in the planar view and communicate with one another in the first direction,
   each one of the plurality of second through-holes is formed in a shape for guiding each one of the plurality of electronic component main bodies on the second guide body to each one of the plurality of first through-holes,
   each one of the plurality of first through-holes is formed in a shape for provisionally positioning each one of the plurality of electronic component main bodies guided by each one of the plurality of second through-holes, and
   when height in the first direction of each one of the plurality of electronic component main bodies held by the positioning main body is represented as H, lengths in the first direction of each ones of the plurality of first through-holes and the plurality of second through-holes are respectively represented as L 1 and L2, and depth in the first direction of each one of the plurality of holes is represented as D,
   L1<H<D+L1+L2 and D<H hold.

   According to an aspect of the present invention, each one of the plurality of electronic component main bodies irregularly placed on the second guide body is guided to each one of the plurality of first through-holes of the first guide body via each one of the plurality of second through-holes by, for example, vibrating the jig assembly (a first step). Consequently, the plurality of electronic component main bodies are disposed in the plurality of first through-holes of the first guide body and provisionally positioned. Thereafter, the second guide body is detached (a second step). Then, since L1<H, the plurality of electronic component main bodies disposed in the plurality of first through-holes of the first guide body project from the first guide body. The plurality of electronic component main bodies projecting from the first guide body are press-fit in the plurality of holes of the positioning jig main body when projecting ends of the plurality of electronic component main bodies are pressed by the press plate or the like (a third step). In this way, the plurality of electronic component main bodies are positioned and held by the positioning main body. Note that, since H<D+L1+L2, when the second guide body is not detached, the press plate or the like comes into contact with the second guide body before the electronic component main body is completely press-fit in the hole having the depth D, the press-fitting cannot be completed. Thereafter, by detaching the first guide body (a fourth step), since D<H, the end portion of the electronic component main body held by the positioning main body can be projected from the positioning main body. Consequently, the positioning main body can be used as a conveying jig as well or the plurality of electronic component main bodies positioned by the positioning main body can be simultaneously delivered to the conveying jig. Note that, differently from the invention, if H≥D+L1+L2 holds, the second step is unnecessary. However, the thickness in the first direction of a part or all of the positioning main body, the first guide body, and the second guide body has to be made excessively small, mechanical strength of the jig assembly becomes insufficient, or a sufficient holding force cannot be secured by the holes of the positioning main body.
(2) In accordance with aspect (1), when orthogonal two axes in a surface parallel to a principal plane of the first guide body are represented as an X axis and a Y axis, length of the X axis and width of the Y axis of each one of the plurality of through-holes are represented as LXG and WYG, and length of the X axis and width of the Y axis of each one of the plurality of electronic component main bodies at a time when being held by the positioning main body are represented as LXE and WYE,
   LXG>LXE and WYG>WYE and (LXG-LXE)>(WYG-WYE) or (LXG-LXE)<(WYG-WYE) may hold. That is, by respectively setting the dimensions LXG and WYG of the X axis and the Y axis of the first through-hole larger than the dimensions LXE and WYE of the X axis and the Y axis of the electronic component main body, the electronic component main body can be received in the first through-hole without being press-fit. At this time, when the dimension difference (LXG-LXE) in the X-axis direction>the dimension difference (WYG-WYE) in the Y-axis direction, the electronic component main body can be provisionally positioned with positional deviation in the Y-axis direction reduced in the first through-hole. Conversely, when the dimension difference (LXG-LXE) in the X-axis direction<the dimension difference (WYG-WYE) in the Y-axis direction, the electronic component main body can be provisionally positioned with positional deviation in the X-axis direction reduced in the first through-hole. In this way, the provisional positioning of the electronic component main body in the first through-hole can reduce the positional deviation in one of the X axis or the Y axis.
(3) In accordance with aspect (2), when (LXG-LXE)>(WYG-WYE) holds, the positioning main body may include, in a position where each one of the plurality of holes is divided into two by the X axis, two slits communicating with each one of the plurality of holes and extending in parallel to the Y axis. Then, since the holes of the positioning main body are equally elastically deformed in the X-axis direction with the two slits extending in parallel to the Y axis as borders, the electronic component main body held by the holes are centered in the X-axis direction. In this way, in the X-axis direction in which the electronic component main body is roughly provisionally positioned in the first through-hole, the electronic component main body can be centered in the holes of the positioning main body.
(4) In accordance with the aspect (2), when (LXG-LXE)<(WYG-WYE) holds, the positioning main body may include, in a position where each one of the plurality of holes is divided into two by the Y axis, two slits communicating with each one of the plurality of holes and extending in parallel to the X axis. Then, since the holes of the positioning main body are equally elastically deformed in the Y-axis direction with the two slits extending in parallel to the X axis as borders, the electronic component main body held by the holes are centered in the Y-axis direction. In this way, in the Y-axis direction in which the electronic component main body is roughly provisionally positioned in the first through-hole, the electronic component main body can be centered in the holes of the positioning main body.
(5) In accordance with any one of aspects (1) to (4), each one of the plurality of second through-holes may include a taper surface at an opening end portion on an exposed principal plane on an opposite side of a surface on which the second guide body is superimposed on the first guide body, and a second opening area defined by the taper surface may be wider than a first opening area of each one of the plurality of first through-holes. Then, a guiding function of the second through-hole can be improved by the taper surface having the wide opening area.
(6) In accordance with any one of aspects (1) to (5), H≈D+L1 may hold. That is, when the height in the first direction of the plurality of electronic component main bodies held by the positioning main body is represented as H and the depth of the hole is represented as D, the height H of the electronic main body is substantially equal to the sum of the depth D and the length L1 of the first through-hole. Then, the press plate that presses the projection ends of the plurality of electronic component main bodies projecting from the first through-hole of the first guide body comes into contact with the first guide body functioning as a stopper and is stopped moving. Consequently, it is possible to prevent an excessive press load from acting on the electronic component main body after being press-fit in the hole. Note that, if the press plate includes a cushioning mechanism, the above formula may not hold.
(7) In accordance with any one of aspects (1) to (6), the positioning main body may include:
   an elastic body through which the plurality of holes pierce from the first surface to be formed; and
   a substrate disposed on a second surface on an opposite side of the first surface of the elastic body, and
   bottom surfaces of the plurality of holes may be defined by the substrate. In this way, a bottomed hole to be elastically deformed can be formed.
(8) In accordance with any one of aspects (1) to (6), the positioning main body may include:
   an elastic body including the first surface;
   a supporting body joined to a second surface on an opposite side of the first surface of the elastic body; and
   a substrate joined to the supporting body,
   the plurality of holes may be formed to pierce through the elastic body and the supporting body and be made elastically deformable in a portion formed in the elastic body, and
   bottom surfaces of the plurality of holes may be defined by the substrate. In this way, the bottomed hole to be elastically deformed can also be formed. With this structure, when the plurality of holes are formed in the elastic body joined to the supporting body in which the plurality of holes are formed in advance, a small piece removed from the elastic body can be dropped downward via the hole formed in the supporting body.
(9) In accordance with aspect (8), the substrate may include a vacuum suction passage communicating with the plurality of holes. Then, for example, when the plurality of electronic component main bodies are guided to the plurality of first through-holes of the first guide body via the plurality of second through-holes of the second guide body, the plurality of electronic component main bodies can be sucked in vacuum.
(10) In accordance with any one of aspects (1) to (9), inner surfaces of the plurality of holes may be coated with fluorocarbon resin. Consequently, it is possible to prevent the electronic component main body press-fit in the hole from being damaged. Note that, in the positioning jig including the positioning main body in which the plurality of holes elastically deformed to be capable of positioning and holding the plurality of electronic component main bodies to be press-fit are formed, fluorocarbon resin coated on the inner surfaces of the plurality of holes may be provided.
(11) In accordance with aspect (7) or (8), in the substrate, at least a region defining the bottom surfaces of the plurality of holes may be coated with fluorocarbon resin. Consequently, it is possible to prevent the electronic component main body in contact with the bottom surface of the hole from being damaged.
(12) In accordance with any one of aspects (7) to (9), at least the elastic body may be used as a conveying jig that positions and holds and conveys each of the plurality of electronic component main bodies. In this case, the substrate and/or the supporting body may be detached from the elastic body or the substrate and/or the supporting body may be joined to the elastic body.
(13) In accordance with another one of some aspects, there is provided a method of positioning a plurality of electronic component main bodies using the positioning jig assembly according to any one of aspect (1) to (12), the method comprising:
   a first step of vibrating the positioning jig assembly and guiding, with each one of the plurality of second through-holes, each one of the plurality of electronic component main bodies placed at random on the second guide body and introducing the each one of the plurality of electronic component main bodies into each one of the plurality of first through-holes;
   a second step of detaching the second guide body from the first guide body;
   a third step of pressing, in the first direction, the plurality of electronic component main bodies projecting from the plurality of first through-holes of the first guide body and press-fitting the plurality of electronic component main bodies into the plurality of holes of the positioning main body; and
   a fourth step of thereafter detaching the first guide body from the positioning main body.

   According to another aspect (13) of the invention, the electronic component main body can be positioned using the positioning jig assembly described in any one of (1) to (12). When the positioning jig assembly in aspect (12) of the invention is used, the attachment of the electronic component main body to the elastic body functioning as the conveying jig as well is completed by positioning the electronic component main body in the elastic body.
(14) In accordance with aspect (13), the third step may include:
   a step of placing a press plate on the plurality of electronic component main bodies projecting upward from the first guide body;
   a step of pressing the press plate in the first direction with a press apparatus and press-fitting the plurality of electronic component main bodies into the plurality of holes of the positioning main body; and
   a step of thereafter removing the press plate from the first guide body. Then, the plurality of electronic component main bodies can be pressed with an equal force via the press plate.
(15) In accordance with aspect (14), in the fourth step, the first guide body may be sucked by a suction pad disposed in the press apparatus, the suction pad may be raised by the press apparatus, and the first guide body may be detached from the positioning main body. Then, the press apparatus can be used for both of a press operation of the press plate and a detaching operation of the first guide body. Consequently, a time required for the third and fourth steps can be reduced.
(16) In accordance with another one of some aspects, there is provided a method of attaching a plurality of electronic component main bodies to a conveying jig using the positioning jig assembly according to any one of claims 1 to 11, the method comprising:
   a first step of vibrating the positioning jig assembly and guiding, with each one of the plurality of second through-holes, each one of the plurality of electronic component main bodies placed at random on the second guide body and introducing the each one of the plurality of electronic component main bodies into each one of the plurality of first through-holes;
   a second step of detaching the second guide body from the first guide body;
   a third step of pressing, in the first direction, the plurality of electronic component main bodies projecting from the plurality of first through-holes of the first guide body and press-fitting the plurality of electronic component main bodies into the plurality of holes of the positioning main body;
   a fourth step of detaching the first guide body from the positioning main body; and
   a fifth step of attaching, to an adhesive layer of the conveying jig, an end face of each of the plurality of electronic component main bodies projecting from the plurality of first through-holes of the first guide body.

   According to another aspect (16) of the invention, after the electronic component main body is positioned using the positioning jig assembly described in any one of (1) to (11), the plurality of electronic components maintaining the positioned state can be attached to the adhesive layer of the conveying jig and delivered.
(17) In accordance with aspect (16), the conveying jig may include a first conveying jig and a second conveying jig,
   each of the plurality of electronic component main bodies may include one end face and another end face,
   in the fifth step, the one end face of each of the plurality of electronic component main bodies may be attached to a first adhesive layer of the first conveying jig, and
   the method may further comprise:
      a sixth step of, after an end of treatment on the one end face of each of the plurality of electronic component main bodies, attaching, to a second adhesive layer of the second conveying jig, the other end face of each of the plurality of electronic component main bodies attached to the first conveying jig; and
      a seventh step of delivering the plurality of electronic component main bodies from the first conveying jig to the second conveying jig in a state in which the other end face of each of the plurality of electronic component main bodies is attached to the second adhesive layer having a stronger adhesive force than the first adhesive layer.

      According to another aspect (17) of the invention, it is possible to deliver the plurality of electronic component main bodies from the first conveying jig to the second conveying jig while maintaining an array of the plurality of electronic component main bodies positioned by the positioning jig assembly.
(18) In accordance with another one of some aspects, there is provided a positioning jig comprising:
   an elastic body; and
   a holding section cut out and formed in a depth direction from a front surface of the elastic body, an electronic component main body being elastically held by the holding section, wherein
   the holding section includes:
      a space section in which the electronic component main body is disposed, a first length of the space section in a first direction being larger than a second length of the space section in a second direction in a planar view from a direction orthogonal to the front surface of the elastic body, the first direction and the second direction being directions orthogonal in a surface parallel to the front surface of the elastic body;
      two first contact sections in contact with, from both sides in the first direction, the electronic component main body disposed in the space section;
      two second contact sections in contact with, from both sides in the second direction, the electronic component main body disposed in the space section; and
      a clearance section adjacent to at least one of the two second contact sections and formed by cutting out the elastic body, the clearance section forming a space for allowing the at least one second contact section to be elastically deformed.

      According to another aspect (18) of the invention, when the electronic component main body is press-fit in the space section, the electronic component main body is positioned in the first direction and the second direction in the space section. At this time, at least one of the two second contact sections is displaced to the clearance section side and elastically deformed. That is, the clearance section functions as a deformation allowing section that allows at least one of the two second contact sections to be elastically deformed toward the clearance section. In this way, at least one of the two second contact sections is easily elastically deformed. Consequently, the area of the space section in a planar view is expanded when the electronic component main body is press-fit. Accordingly, an excessive press-fit force is unnecessary, a load acting on the electronic component main body can be reduced, and a press-fit failure of the electronic component main body is reduced even with a proper press-fit force. Damage that the elastic body suffers at the press-fit time can also be reduced. The life of the positioning jig can be extended.
(19) In accordance with another aspect (18), length in the first direction of a region where the clearance section is formed may be smaller than the first length of the space section. That is, even if the clearance section is not formed over the entire length in the first direction of the space section, the elastic deformation of at least one of the two second contact sections is allowed. Note that the length in the first direction of a region where the clearance section is formed may be larger than the first length of the space section or may be the same as the first length of the space section.
(20) In accordance with another aspect (18) or (19), the space section and the clearance section may communicate in the planar view. Then, since the two second contact sections include free end portions in the planar view, the free end portions are more easily elastically deformed.
(21) In accordance with another aspect (18) or (19), the two second contact sections may include two second inner wall sections facing each other in the second direction across the space section,
   the clearance section may include a first clearance section and a second clearance section, and
   in the planar view, one of the two second inner wall sections may be disposed between the first clearance section and the space section and another of the two second inner wall sections may be disposed between the second clearance section and the space section. Then, one of the two second inner wall sections is elastically deformed in the first clearance section and the other of the two second inner wall sections is elastically deformed in the second clearance section.
(22) In another aspect (19) of the invention, each of the two second inner wall sections may include a slit in the center in the first direction. Then, the space section and the clearance section communicate via the slit. Each of the two second inner wall sections is divided in the center and four second inner wall sections are formed. Therefore, since the four second inner wall sections include four free end portions in the planar view, the free end portions are more easily elastically deformed.
(23) In accordance with another aspect (20), the two second contact sections may locally include at least two second inner wall sections facing each other in the second direction across the space section, and
   the clearance section may be disposed on both sides of each of the at least two second inner wall sections in the first direction in a planar view. Then, the at least two second inner wall sections include at least two free end portions facing each other across the space section on the planar view. Therefore, the free end portions are more easily elastically deformed.
(24) In accordance with any one of aspects (18) to (23), at least one of the space section and the clearance section may include a through-hole piercing through the elastic body from the front surface to a rear surface of the elastic body. The space section and the clearance section may not pierce through the elastic body from the front surface to the rear surface of the elastic body but may locally include a through-hole. In a part including the through-hole, the elastic body is more easily locally elastically deformed compared with a part not including the through-hole. Accordingly, it is possible to adjust a setting part and a size of the through-hole and adjust easiness in elastic deformation of the elastic body around the space section.
(25) In accordance with another aspect (22), each of the space section, the clearance section, and the slit may include through-holes piercing through the elastic body from the front surface to a rear surface of the elastic body and communicating each other in the planar view. Then, by forming the through-hole communicating with the space section, the clearance section, and the slit in the planar view, the four free end portions of the four second inner wall sections are easily elastically deformed in a stereoscopic view.

### BRIEF DESCRIPTION OF THE DRAWINGS

FIG. 1 is a partial sectional view of a positioning jig assembly in an embodiment of the present invention and is a diagram illustrating a first step of a positioning method for an electronic component main body.
FIG. 2 is a schematic perspective view of a positioning main body in the positioning jig assembly illustrated in FIG. 1.
FIG. 3 is a plan view of a second through-hole formed in a second guide body in the positioning jig assembly.
FIG. 4 is a plan view of a first through-hole formed in a first guide body in the positioning jig assembly.
FIG. 5 is a plan view of a hole formed in the positioning main body in the positioning jig assembly.
FIG. 6 is a plan view illustrating a relation between the hole formed in the positioning main body and the electronic component main body.
FIG. 7 is a diagram illustrating a second step of the positioning method for the electronic component main body.
FIG. 8 is a diagram illustrating a start of a third step of the positioning method for the electronic component main body.
FIG. 9 is a diagram illustrating an end of the third step of the positioning method for the electronic component main body.
FIG. 10 is a diagram illustrating a fourth step of the positioning method for the electronic component main body.
FIG. 11 is a diagram illustrating a start of a fifth step of a method of attaching the electronic component main body to a conveying jig.
FIG. 12 is a diagram illustrating an end of the fifth step of the method of attaching the electronic component main body to the conveying jig.
FIG. 13 is a diagram illustrating a start of a sixth step of the method of attaching the electronic component main body to the conveying jig.
FIG. 14 is a diagram illustrating an end of the sixth step of the method of attaching the electronic component main body to the conveying jig.
FIG. 15A and FIG. 15B are diagrams illustrating a prepress process.
FIG. 16A to FIG. 16C are diagrams illustrating a coating process.
FIG. 17A to FIG. 17C are diagrams illustrating a process for removing extra paste.
FIG. 18 is a diagram illustrating a first step in the prepress process.
FIG. 19 is a diagram illustrating a second step in the prepress process.
FIG. 20 is a diagram illustrating third and fourth steps in the prepress process.
FIG. 21 is a diagram illustrating a fifth step in the prepress process.
FIG. 22 is a diagram illustrating a chip three-terminal capacitor manufactured according to an embodiment of the invention.
FIGS. 23A and 23B illustrate a first step for intaglio-printing a ground electrode, wherein FIG. 23A is a view from a longitudinal direction X1 of FIG. 22 and FIG. 23B is a view from a latitudinal direction Y1 of FIG. 22.
FIGS. 24A and 24B illustrate a second step for intaglio-printing the ground electrode, wherein FIG. 24A is a view from the longitudinal direction X1 of FIG. 22 and FIG. 24B is a view from the latitudinal direction Y1 of FIG. 22.
FIGS. 25A and 25B illustrate a third step for intaglio-printing the ground electrode, wherein FIG. 25A is a view from the longitudinal direction X1 of FIG. 22 and FIG. 25B is a view from the latitudinal direction Y1 of FIG. 22.
FIG. 26 is a sectional view illustrating a modification of the positioning main body.
FIG. 27 is a diagram illustrating a vacuum suction hole functioning as a vacuum suction passage opened in the rear surface of a substrate.
FIG. 28 is a diagram illustrating a recess functioning as a vacuum suction passage formed in the front surface of the substrate.
FIG. 29 is a partial plan view illustrating a modification of a holding section formed in a positioning jig.
FIG. 30 is an A-A sectional view of FIG. 29.
FIG. 31 is a B-B sectional view of FIG. 29.
FIG. 32 is a C-C sectional view of FIG. 29.
FIG. 33 is a plan view illustrating elastic deformation of two first contact sections at the time when the electronic component main body is press-fit.
FIG. 34 is a partial plan view illustrating a modification of the holding section illustrated in FIG. 29.
FIG. 35 is a diagram illustrating a start of a third step of the positioning method for the electronic component main body.
FIG. 36 is a diagram illustrating a pressing operation in the third step of the positioning method for the electronic component main body.
FIG. 37 is a diagram illustrating an end of the third step and a fourth step of the positioning method for the electronic component main body.

### DESCRIPTION OF EMBODIMENTS

In the following disclosure, many different embodiments and examples are provided in order to implement different characteristics of a presented subject. Naturally, the embodiments and the examples are mere examples and are not intended to be limiting. Further, in the present disclosure, reference numerals and/or characters are sometimes repeated in various examples. Such repetition is for simplicity and clarity and the repetition itself does not need to have a relation with various embodiments and/or explained configurations. Further, when a first element is described as "connected" or "coupled" to a second element, such description includes an embodiment in which the first element and the second element are directly connected or coupled to each other and includes an embodiment in which the first element and the second element are indirectly connected or coupled to each other via one or more other elements interposed between the first element and the second element. When the first element is described as "moving" with respect to the second element, such description includes an embodiment of relative movement in which at least one of the first element and the second element moves with respect to the other.

### 1. Positioning of an electronic component main body

### 1.1. Positioning jig assembly of the electronic component main body

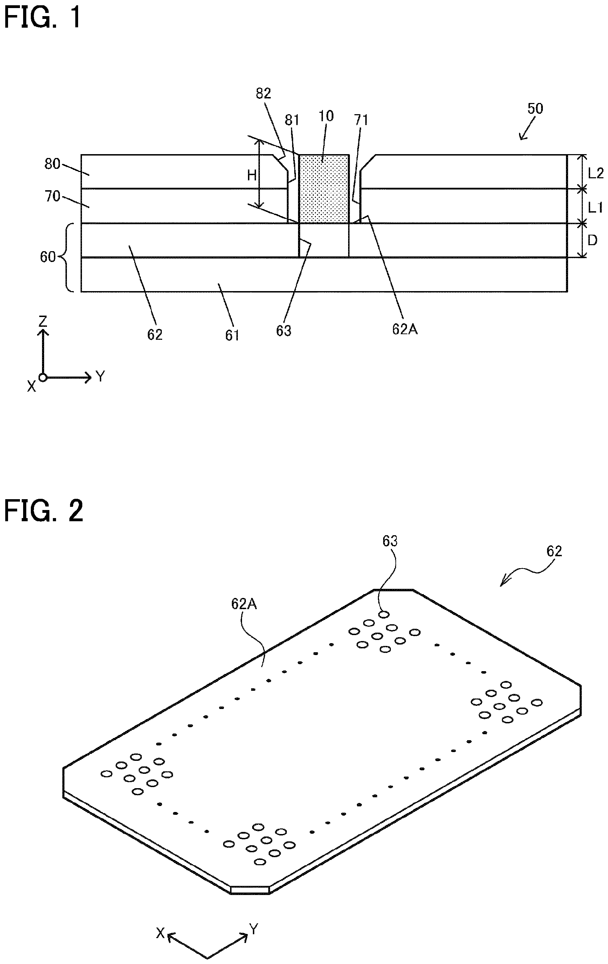

FIG. 1 is a partial sectional view of a positioning jig assembly 50. A positioning jig assembly 50 includes a positioning main body (referred to as positioning jig as well) 60, a first guide body 70, and a second guide body 80. When orthogonal three axes defined in FIG. 1 are represented as X, Y, and Z, the positioning main body 60, the first guide body 70, and the second guide body 80 are superimposed in a planar view from a Z direction (a first direction).

The positioning main body 60 can include a substrate 61, which is a rigid body, and an elastic body, for example, a rubber plate 62 stacked on the substrate 61. The substrate 61 and the rubber plate 62 may be joined by bonding, welding, adhesion, or the like or may not be joined. Surfaces to be joined of the substrate 61 and the rubber plate 62 may be subjected to surface treatment. The rubber plate 62 includes a plurality of holes 63. The plurality of holes 63 pierce through the rubber plate 62 in the Z direction as illustrated in FIG. 1. The substrate 61 and the rubber plate 62 are stacked, whereby the plurality of holes 63 become bottomed holes, bottom surfaces of which are defined by the substrate 61. The plurality of bottomed holes 63 are opened in a first surface 62A of the rubber plate 62. Note that the Z direction (the first direction) is defined as a direction orthogonal to the first surface 62A of the rubber plate 62. Contours of the plurality of holes 63 are circles in FIG. 2. However, not only this, but the contours of the plurality of holes 63 may be rectangles, polygons having five or more corners, ellipses, or the like. A contour shape of the plurality of holes 63 is explained below.

The first guide body 70 formed by a rigid body, for example, a Bakelite plate is detachably disposed to be superimposed on the first surface 62A of the positioning main body 60. The first guide body 70 includes a plurality of first through-holes 71 (only one is illustrated in FIG. 1) respectively overlapping the plurality of holes 63 of the positioning main body 60 in a planar view from the Z direction (the first direction). The first through-hole 71 pierces through the first guide body 70 in the Z direction (the first direction).

The second guide body 80 formed by a rigid body, for example, a Bakelite plate is detachably disposed to be superimposed on the first guide body 70. The second guide body 80 includes a plurality of second through-holes 81 (only one is illustrated in FIG. 1) respectively overlapping the plurality of holes 63 of the positioning main body 60 and the plurality of first through-holes 71 of the first guide body 70 in the planar view from the Z direction (the first direction). The second through-hole 81 also pierces through the second guide body 80 in the Z direction (the first direction). That is, the hole 63, the first through-hole 71, and the second through-hole 81 of the positioning jig assembly 50 communicate in the Z direction (the first direction). Note that the positioning main body 60, the first guide body 70, and the second guide body 80 are positioned with respect to one another such that this positional relation is maintained.

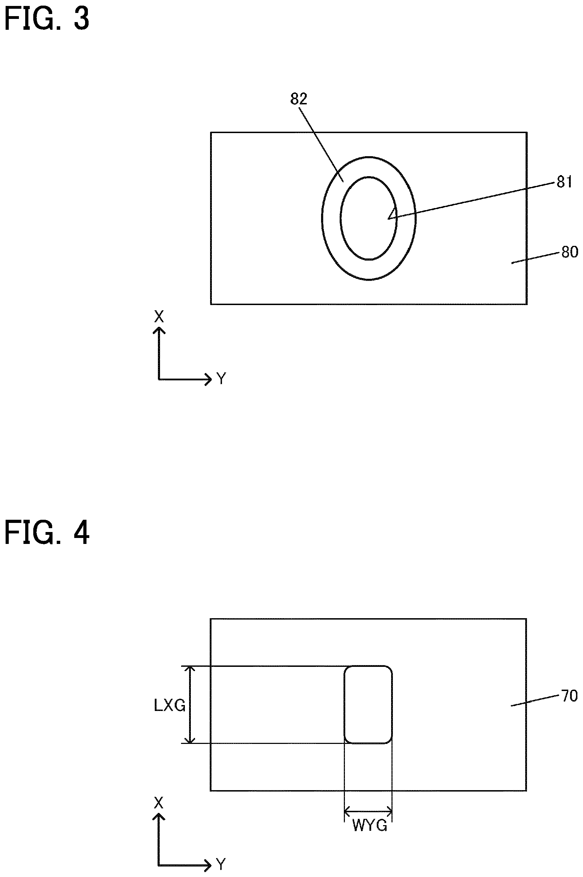

Subsequently, the hole 63, the first through-hole 71, and the second through-hole 81 of the positioning jig assembly 50 are explained with reference to FIG. 3 to FIG. 6. First, the second through-hole 81 of the second guide body 80 is formed in a shape for guiding each one of the plurality of electronic component main bodies 10 on the second guide body 80 to each one of the plurality of first through-holes 71. Therefore, the second through-hole 81 has an opening area wider than a lateral sectional area of an electronic component main body 10. Preferably, as illustrated in FIG. 1, the second through-hole 81 can include a taper surface 82 at an opening end portion on a principal plane exposed on the opposite side of a surface on which the second guide body 80 is superimposed on the first guide body 70. Here, in this embodiment, a contour in the planar view of the electronic component main body 10 is, for example, a rectangular having the X axis as a longitudinal axis. In this case, a contour in the planar view of the second through-hole 81 illustrated in FIG. 3 is, for example, an ellipse having the X axis as a major axis but may be, for example, a rectangle other than the ellipse.

The first through-hole 71 of the first guide body 70 is formed in a shape for provisionally positioning the electronic component main body 10 guided by the second through-hole 81. Here, as illustrated in FIG. 4, a contour in the planar view of the first through-hole 71 is a rectangle. Accordingly, the electronic component main body 10 disposed in the first through-hole 71 is arrayed and provisionally positioned such that at least the direction of the major axis substantially coincides with the X axis.

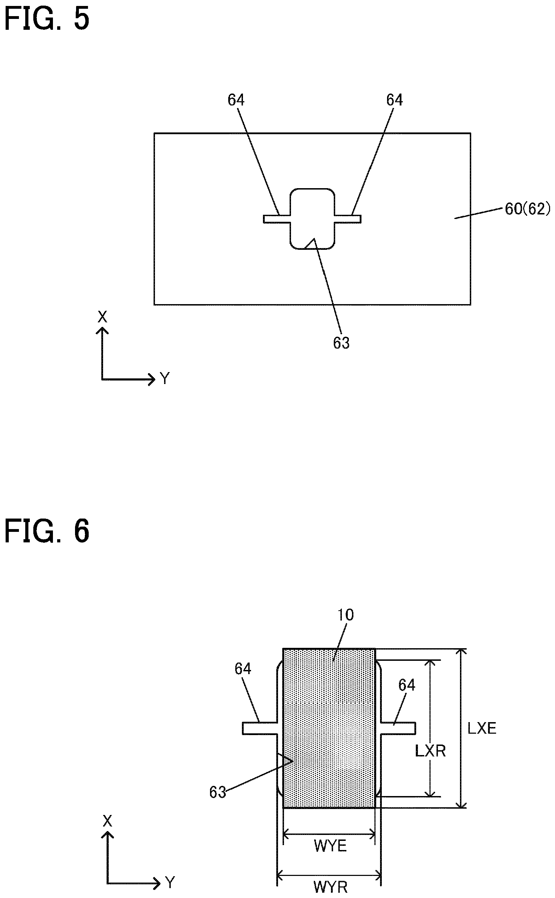

Here, the length of the X axis and the width of the Y axis of the first through-hole 71 are represented as LXG and WYG. On the other hand, as illustrated in FIG. 6, the length of the X axis and the width of the Y axis of the electronic component main body 10 are represented as LXE and WYE. In this case, LXG>LXE and WYG>WYE hold. That is, by setting the dimensions LXG and WYG of the X axis and the Y axis of the first through-hole 71 respectively larger than the dimensions LXE and WYE of the X axis and the Y axis of the electronic component main body, the electronic component main body 10 are received in the first through-hole 71 without being press-fit.

Preferably, the first through-hole 71 can improve, for example, accuracy of provisionally positioning the electronic component main body 10 in one of the orthogonal two axes X and Y. Accordingly, (LXG-LXE)>(WYG-WYE) or (LXG-LXE)<(WYG-WYE) can be satisfied. In this embodiment, the dimension difference (LXG-LXE) in the X-axis direction>the dimension difference (WYG-WYE) in the Y-axis direction. Then, the electronic component main body 10 can be provisionally positioned with positional deviation in the Y-axis direction reduced in the first through-hole 71. Conversely, when the dimension difference (LXG-LXE) in the X-axis direction<the dimension difference (WYG-WYE) in the Y-axis direction, the electronic component main body 10 can be provisionally positioned with positional deviation in the X-axis direction reduced in the first through-hole 71. In this way, the provisional positioning of the electronic component main body 10 in the first through-hole 71 can reduce positional deviation in one of the X axis and the Y axis.

The hole 63 of the positioning main body 60 is formed to pierce through the rubber plate 62 to thereby elastically deform the press-fit electronic component main body 10 to be capable of being positioned and held. As illustrated in FIG. 6, the dimensions of the X axis and the Y axis of the hole 63 are represented as LXR and WYR. In this embodiment, when the contours in the planar view of the hole 63 and the electronic component main body 10 are compared, as illustrated in FIG. 6, for example, LXR<LXE and WYR>WYE. That is, the hole 63 is elastically deformed and expanded at least in the X-axis direction to position and hold the electronic component main body 10 at least in the X-axis direction. Note that the hole 63 may be elastically extended in the length in the X-axis direction to be reduced in the width in the Y-axis direction to thereby position and hold the electronic component main body 10 in the Y-axis direction as well. As illustrated in FIG. 5 and FIG. 6, the positioning main body 60 (the rubber plate 62) can include, in a position where the hole 63 is divided into two by the X axis, two slits 64 communicating with the hole 63 and extending in parallel to the Y axis. Note that the slits 64 have a centering function for the electronic component main body 10 as explained below besides a role of making it easy to elastically deform the hole 63.

Here, as illustrated in FIG. 1, when the height in the Z direction of the electronic component main body 10 held by the positioning main body 60 is represented as H, the lengths in the Z direction of the first through-hole 71 and the second through-hole 81 are respectively represented as L1 and L2, and the depth in the Z direction of the hole 63 is represented as D, L1<H<D+L1+L2 and D<H hold. A reason for this is explained in detail in the following explanation of a positioning method for an electronic component main body.

### 1.2. Positioning method for an electronic component main body

### 1.2.1 First step

A first step is a step for, as illustrated in FIG. 1, guiding one electronic component main body 10 to one first through-hole 71 of the first guide body 70 with one second through-hole 81 of the second guide body 80. Accordingly, a large number of electronic component main bodies 10 are supplied to and placed at random on the second guide body 80 and the positioning jig assembly 50 is vibrated in the Z-axis direction and/or an X-Y plane. The electronic component main body 10 slightly moved by the vibration can be guided to the first through-hole 71 via the second through-hole 81 as illustrated in FIG. 1. At this time, the electronic component main body 10 having a rectangular contour as illustrated in FIG. 6 is guided to the first through-hole 71 illustrated in FIG. 4 via the second through-hole 81 illustrated in FIG. 3 to thereby be provisionally positioned such that the longitudinal side of the contour of the electronic component main body 10 is aligned with the X axis. Further, in this embodiment, when the dimension difference (LXG-LXE) in the X-axis direction>the dimension difference (WYG-WYE) in the Y-axis direction, the electronic component main body 10 can be provisionally positioned with positional deviation in the Y-direction reduced in the first through-hole 71.

### 1.2.2. Second step

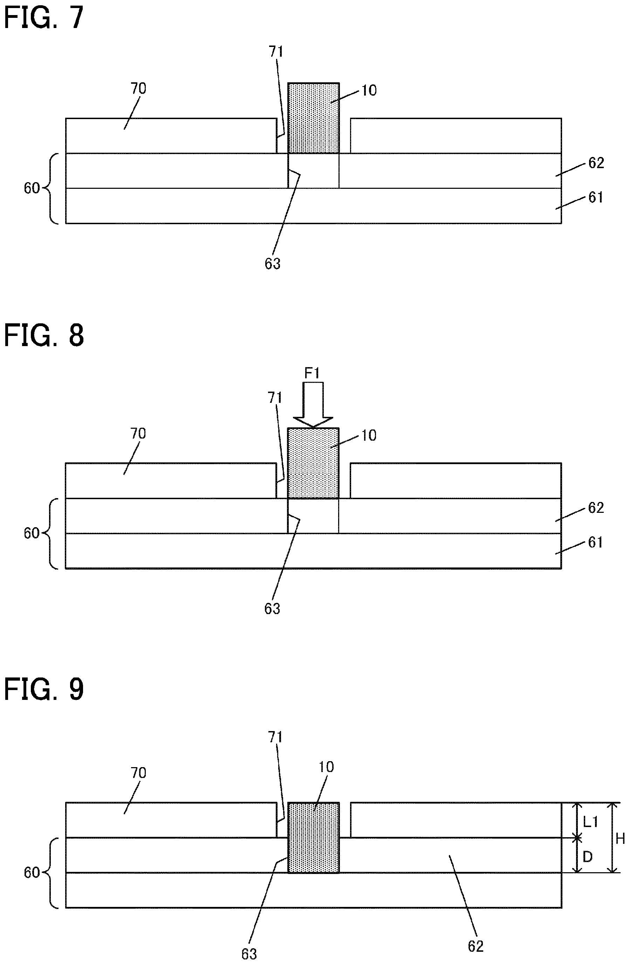

In a second step, first, as illustrated in FIG. 7, the second guide body 80 is detached from the first guide body 70. Consequently, since the Z-direction length L1 of the first through-hole 71 is smaller than the height H in the Z direction of the electronic component main body 10 (L1<H), the electronic component main body 10 projects from the first guide body 70.

### 1.2.3. Third step

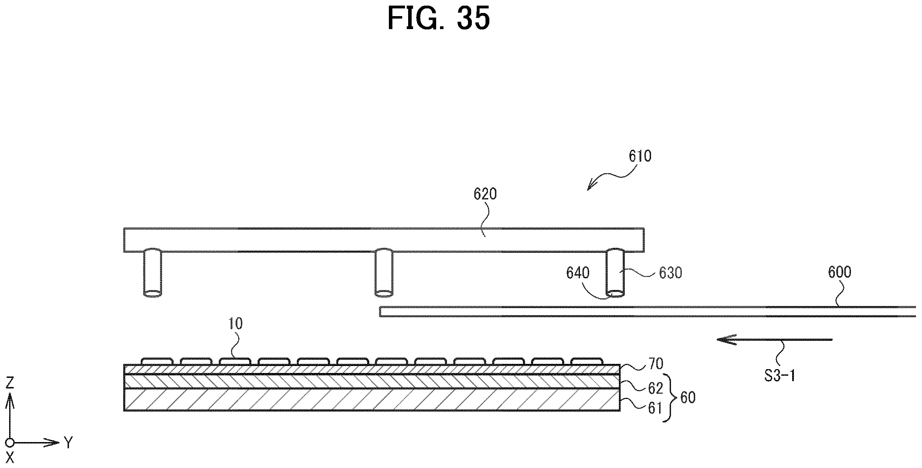

Subsequently, as illustrated in FIG. 8, the electronic component main body 10 is pressed from above by a pressing force F1. The pressing force F1 can be implemented using, for example, a press plate 600 illustrated in FIG. 35 to be simultaneously applied to the plurality of electronic component main bodies 10 disposed in the plurality of first through-holes 71. Consequently, as illustrated in FIG. 9, the plurality of electronic component main bodies 10 are respectively press-fit in the plurality of holes 63 of the positioning main body 60 and held.

FIG. 35 to FIG. 37 illustrate a specific example of the third step. As illustrated in FIG. 35, the press plate 600 and a press apparatus 610 are used to implement the third step. The press plate 600 is a rigid body having an area capable of coming into contact with all the electronic component main bodies 10 projecting upward from the first guide body 70. The press apparatus 610 can include a rising and falling board 620 lifted and lowered in the Z direction (the first direction) illustrated in FIG. 35 by a not-illustrated driving mechanism and a plurality of pressing sections 630 projecting downward from the rising and falling board 620. The lower end portion of the pressing section 630 presses the press plate 600 downward. In this embodiment, the lower end portion of the pressing section 630 can be a suction pad 640. The suction pad 640 can suck a target object in vacuum by being exhausted by a not-illustrated exhaust section to be set to a negative pressure in the pad.

FIG. 35 illustrates a state in which the second guide body 80 is detached as illustrated in FIG. 7. Upper parts of the plurality of electronic component main bodies 10 project upward from the first guide body 70. For example, when the press apparatus 610 stays on standby above the plurality of electronic component main bodies 10, the press plate 600 is carried into below the press apparatus 610 (step S3-1). Thereafter, the press plate 600 is placed on the plurality of electronic component main bodies 10 projecting from the first guide body 70. Differently from this, the press apparatus 610 movable in the horizontal direction as well may suck and convey the press plate 600 with the suction pad 640 and place the press plate 600 on the plurality of electronic component main bodies 10.

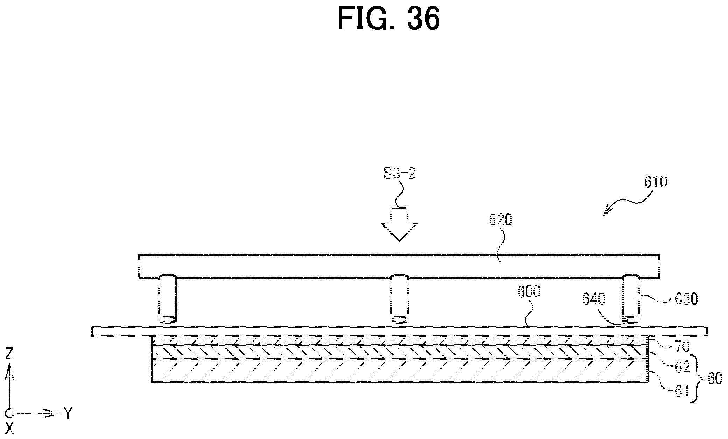

FIG. 36 illustrates a pressing process in FIG. 8. The rising and falling board 620 of the press apparatus 610 falls to thereby press the press plate 600 downward with the pressing section 630 (step S3-2). Consequently, the plurality of electronic component main bodies 10 equally pressed via the press plate 600 are press-fit into the plurality of holes 63 of the positioning main body 60.

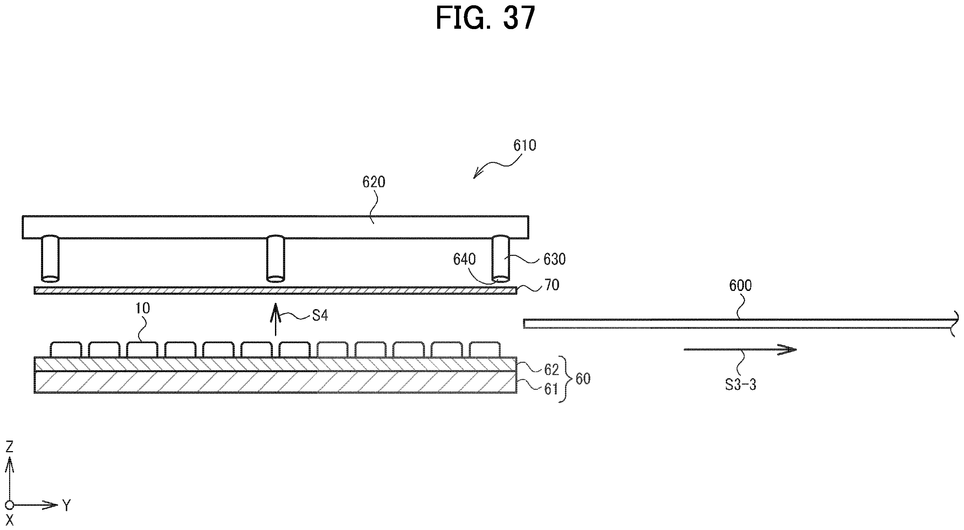

FIG. 37 illustrates a carrying-out operation for the press plate 600 (step S3-3) as an end operation of the third step. In this case, the press apparatus 610 movable in the horizontal direction as well may suck the press plate 600 with the suction pad 640 and carry out the press plate 600.

### 1.2.4. Fourth step

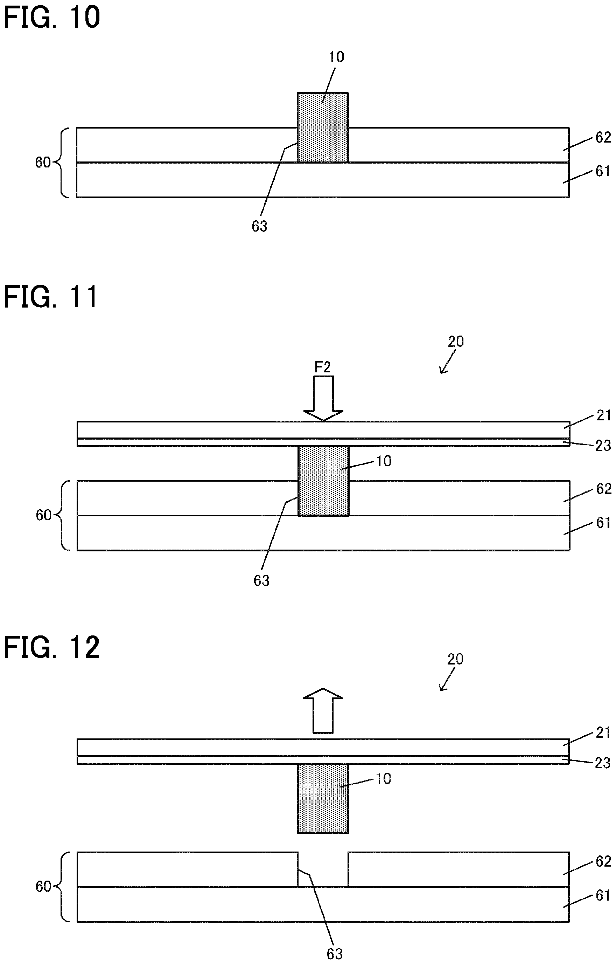

Finally, as illustrated in FIG. 10, the first guide body 70 is detached from the positioning main body 60. Consequently, since the Z-direction depth D of the hole 63 is smaller than the height H in the Z direction of the electronic component main body 10 (D<H), the electronic component main body 10 projects from the positioning main body 60. By using the positioning main body 60 or the elastic body 62 as a conveying jig of the electronic component main body 10 as well, a post process for, for example, forming an external electrode at the projection end portion of the electronic component main body 10 can be implemented. Alternatively, it is possible to transfer the plurality of electronic component main bodies 10 from the positioning main body 60 to another conveying jig while maintaining array positions of the plurality of electronic component main bodies 10.

FIG. 37 illustrates a detaching operation for the first guide body 70 (step S4) that is a fourth step. In FIG. 37, after the press plate 600 is carried out, the rising and falling board 620 of the press apparatus 610 staying on standby above falls and the first guide body 70 is sucked by the suction pad 640. Thereafter, the rising and falling board 620 of the press apparatus 610 rises and the first guide body 70 sucked by the suction pad 640 is detached from the positioning main body 60. The press apparatus 610 can be at least used for both of a press operation for the press plate 600 and the detaching operation for the first guide body 70. Consequently, a time required for the fourth step can be reduced.

Here, H<D+L1+L2 is satisfied because of the following reason. If H≥D+L1+L2 differently from this embodiment, the pressing force F1 illustrated in FIG. 8 can be applied to the press plate while the second guide body 80 is present as illustrated in FIG. 1. This is because the press plate does not come into contact with the second guide body 80 and prevent the press plate from falling before the press-fit of the electronic component main body 10 in the hole 63 is completed as illustrated in FIG. 9. That is, the second step is unnecessary. However, the height H in the Z direction of the electronic component main body 10 is, for example, 1000 µm or less and is 250 µm or less if the height H is the minimum. In this case, in order to satisfy H≥D+L1+L2, the thickness in the Z direction of a part or all of the positioning main body 60 (the elastic body 62), the first guide body 70, and the second guide body 80 has to be set excessively small. Accordingly, mechanical strength of a part or all of the positioning main body 60 (the elastic body 62), the first guide body 70, and the second guide body 80 cannot be secured and a sufficient retaining force by the hole 63 of the elastic body 62 cannot be secured either. When the H<D+L1+L2 holds as in this embodiment, such adverse effects can be eliminated.

As illustrated in FIG. 9, it is more desirable that H≈D+L1 holds. That is, the height H in the Z direction of the plurality of electronic component main bodies held by the positioning main body 60 is substantially equal to the sum of the depth D of the hole and the length L1 of the first through-hole. Then, the press plate that presses projecting ends of the plurality of electronic component main bodies 10 projecting from the first through-hole 71 of the first guide body 70 comes into contact with the first guide body 70 functioning as the stopper and is stopped moving. Consequently, it is possible to prevent an excessive pressing load from acting on the electronic component main body 10 after being press-fit in the hole 63. Even if H≈D+L1 does not strictly hold, the height H can be set to substantially equivalent H≈D+L1 if the height H is in a range in which it is possible to prevent an excessive pressing load from acting on the electronic component main body 10 and make it possible to maintain a commodity value.

Subsequently, the positioning and the holding of the electronic component main body 10 by the hole 63 of the positioning main body 60 is explained in detail. First, since the hole 63 is formed to pierce through the rubber plate 62 that is the elastic body, the hole 63 can be elastically deformed to receive the electronic component main body 10 and elastically hold the electronic component main body 10. Subsequently, since the slits 64 communicate with the hole 63, the portion of the slits 64 is easily elastically deformed and the electronic component main body 10 is easily press-fit in the hole 63. From this meaning only, the position of the slits 64 is not limited. For example, the slits 64 may be formed to communicate with four corners of the hole 63 having the rectangular contour.

Subsequently, as explained above, LXR<LXE and WYR>WYE. That is, the hole 63 is elastically deformed and expanded at least in the X-axis direction to position and hold the electronic component main body 10 at least in the X-axis direction. As illustrated in FIG. 5 and FIG. 6, the positioning main body 60 (the rubber plate 62) includes, in a position where the hole 63 is divided into two by the X axis, two slits 64 communicating with the hole 63 and extending in parallel to the Y axis. Then, since the holes 63 of the positioning main body 60 are equally elastically deformed in the X-axis direction with the two slits 64 extending in parallel to the Y axis as a boundary, the electronic component main body 10 held by the holes 63 is centered in the X-axis direction. In this way, the electronic component main body 10 can be centered by the hole 63 of the positioning main body 60 in the X-axis direction in which the electronic component main body 10 is roughly provisionally positioned in the first through-hole 71.

Differently from this embodiment, when the dimension difference (LXG-LXE) in the X-axis direction<the dimension difference (WYG-WYE) in the Y-axis direction, the electronic component main body 10 can be provisionally positioned with positional deviation in the X-axis direction reduced in the first through-hole 71. In this case, the positioning main body 60 can include, in a position where the hole 63 is divided into two by the Y axis, the two slits 64 communicating with the hole 63 and extending in parallel to the X axis. Then, since the holes 63 of the positioning main body 60 are equally elastically deformed in the Y-axis direction with the two slits 64 extending in parallel to the X axis as a boundary, the electronic component main body 10 held by the holes 63 is centered in the Y-axis direction. In this way, the electronic component main body 10 can be centered by the hole 63 of the positioning main body 60 in the X-axis direction in which the electronic component main body 10 is roughly provisionally positioned in the first through-hole 71.

### 2. Method of attaching the electronic component main body to the conveying jig

A method of finally attaching the electronic component main body 10 to a conveying jig 20 as illustrated in FIG. 11 and FIG. 12 further includes a fifth step illustrated in FIG. 11 and FIG. 12 in addition to the first to fourth step described above. Therefore, the fifth step implemented following the fourth step explained above is explained below.

### 2.1. Fifth step

In the fifth step, as illustrated in FIG. 11, the conveying jig 20 is moved from above and pressed, with a pressing force F2, against the plurality of electronic component main bodies 10 held by the positioning main body 60 by the implementation of the fourth step. The conveying jig 20 includes, for example, a base material 21 and an adhesive layer 23. The end faces of the plurality of electronic component main bodies 10 are stuck and attached to the adhesive layer 23 of the conveying jig 20 by implementation of the fifth step. Thereafter, as illustrated in FIG. 12, if the conveying jig 20 and the positioning main body 60 are relatively moved in the Z direction, the plurality of electronic component main bodies 10 are delivered from the positioning main body 60 to the conveying jig 20. In this way, it is possible to coat and form an external electrode at the end portion of the electronic component main body 10 as explained below using the conveying jig 20.

### 2.2. Sixth step

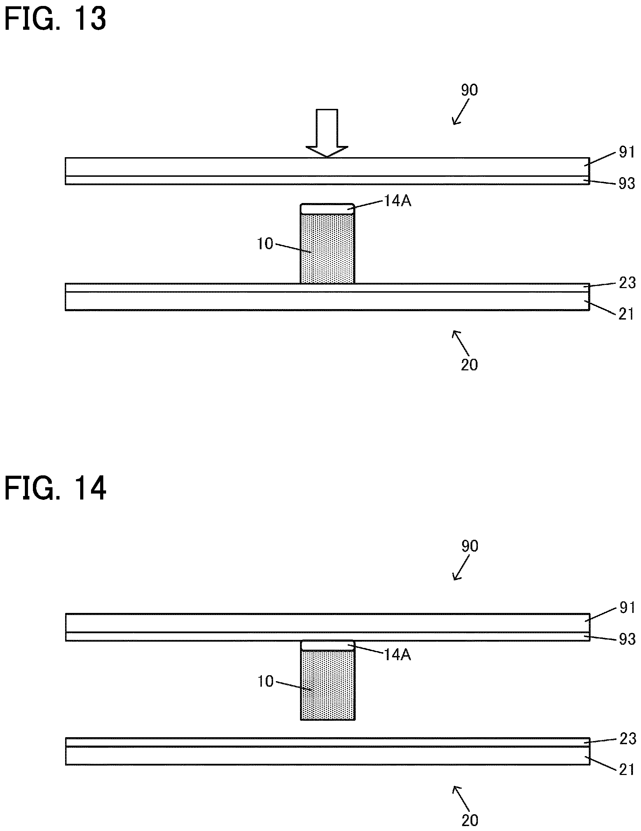

An external electrode 14A is coated and formed at the end portion of the electronic component main body 10 as illustrated in FIG. 13 by the implementation of the fifth step. Here, when the conveying jig 20 holding the electronic component main body 10 in which the external electrode 14A is formed is referred to as first conveying jig 20, a second conveying jig 90 is further prepared. In a sixth step, the other end faces (external electrodes 14A) of the plurality of electronic component main bodies 10, one end faces of which are attached to the first conveying jig 20, are attached to the second conveying jig 90.

Here, an adhesive layer of the first conveying jig 20 is referred to as first adhesive layer 23. Like the first conveying jig 20, the second conveying jig 90 includes, for example, a base material 91 and a second adhesive layer 93. Of both end faces in the Z direction of the electronic component main body 10, the other end face on the opposite side of one end face on which the external electrode 14A is formed is stuck to the first adhesive layer 23 of the first conveying jig 20. In the sixth step, as illustrated in FIG. 13, the second conveying jig 90 is relatively moved toward the external electrode 14A that is one end face of the electronic component main body 10 held by the first conveying jig 20. Consequently, the external electrode 14A, which is one end face of the electronic component main body 10, is stuck to the second adhesive layer 93 of the second conveying jig 90.

### 2.3. Seventh step

Thereafter, as illustrated in FIG. 14, the first conveying jig 20 and the second conveying jig 90 are relatively moved in the Z direction and a seventh step is implemented. Here, an adhesive force of the second adhesive layer 93 of the second conveying jig 90 is set larger than an adhesive force of the first adhesive layer 23 of the first conveying jig 20. Then, by the implementation of the seventh step, the plurality of electronic component main bodies 10 are delivered from the first conveying jig 20 to the second conveying jig 90 while maintaining array positions of the plurality of electronic component bodies 10. In this way, if a coating process explained below is implemented using the second conveying jig 90, it is possible to coat and form an external electrode at the other end portion of the electronic component main body 10.

### 3. Manufacturing method for an electronic component

A manufacturing method for an electronic component using the conveying jig (the first conveying jig) 20 is explained below. A manufacturing method for an electronic component using the second conveying jig 90 is the same. The manufacturing method for the electronic component includes a prepress process and a coating process implemented by holding the electronic component main body 10 in the conveying jig (hereinafter abbreviated as "jig") 20 and can include, according to necessity, a paste removing process implemented after the coating process. The electronic component main body is detached from the jig after the coating process or the paste removing process. The processes are outlined below.

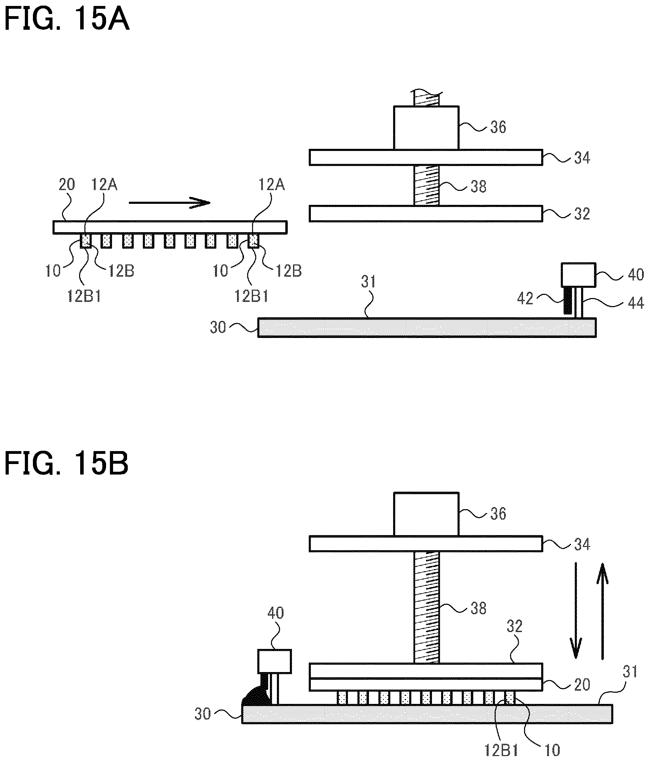

FIG. 15A to FIG. 17C schematically illustrate a main process of an external electrode forming method for a capacitor as the manufacturing method for the electronic component. A surface plate 30 used for all of the prepress process, the coating process, and the paste removing process for the electronic component main body 10 is formed of, for example, ceramic, granite, or metal. A squeegee unit 40 is mounted on the surface plate 30. The squeegee unit 40 is movable along a surface 31 of the surface plate 30. The squeegee unit 40 supports, to be independently capable of rising and falling, a blade 42 made of, for example, metal that lays a dip layer 46 of conductive paste at equal height and a blade 44 made of, for example, rubber that scrapes off the conductive paste from the surface 31 of the surface plate 30.

A movable board 32 capable of rising and falling with respect to a fixed board 34 is disposed above the surface plate 30. Since the jig 20 is detachably supported on the movable board 32, the movable board 32 is referred to as base as well. A lifting and lowering motor 36 is supported on the fixed board 34. The movable board 32 is lifted and lowered by a screw shaft 38 driven to rotate by the lifting and lowering motor 36.

### 3.1. Prepress process

As illustrated in FIG. 15A, the jig 20 holing the plurality of electronic component main bodies 10 in advance is carried into an external electrode forming apparatus. A first end portion 12A of the electronic component main body 10 is a fixed end portion held by the jig 20 and a second end portion 12B of the electronic component main body 10 is a free end. The carried-in jig 20 is fixed to the movable board 32. FIG. 15B illustrates an adjustment process (a prepress process) for an end face height of the electronic component main body 10. In FIG. 15B, the electronic component main body 10 is relatively lowered by the movable board 32 with respect to the surface plate 30, on which conductive paste is not laid, to bring an end face 12B1 of the second end portion 12B of the electronic component main body 10 into contact with the surface plate 30. Thereafter, the electronic component main body 10 is relatively raised by the movable board 32. Consequently, the height of the end face 12B1 of the electronic component main body 10 is uniformized.

### 3.2. Coating process

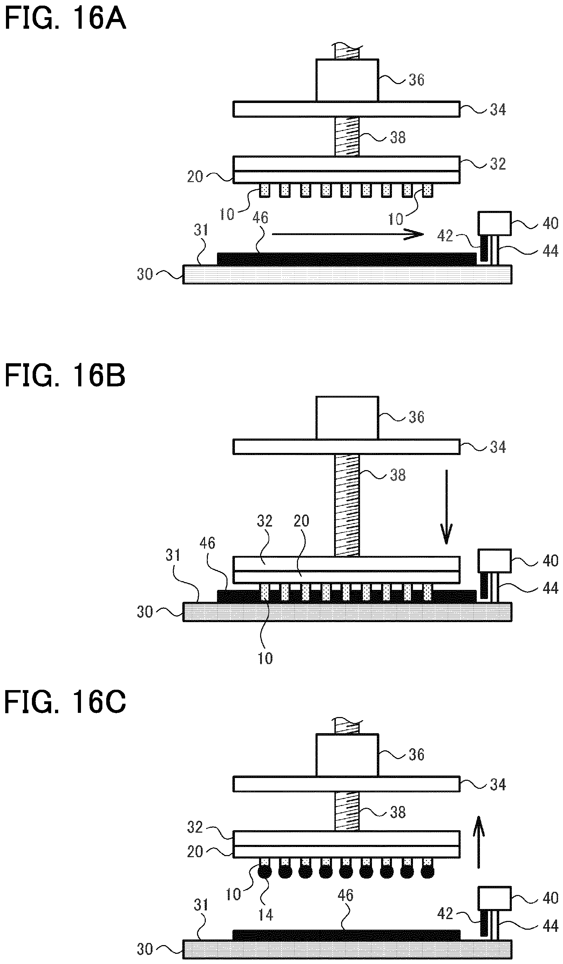

FIG. 16A to FIG. 16C illustrate the coating process for conductive paste. In FIG. 16A, the blade 42 set at predetermined height is horizontally moved by the squeegee unit 40 to form the dip layer 46 having fixed height by the conductive paste on the surface plate 30. In FIG. 16B, The electronic component main body 10 is lowered by the movable board 32 to immerse the second end portion 12B of the electronic component main body 10 in the dip layer 46 on the surface plate 30. At this time, the end face 12B1 of the electronic component main body 10 may be brought into contact with the front surface 31 of the surface plate 30 or may not be brought into contact with the front surface 31. Thereafter, the electronic component main body 10 is raised by the movable board 32. Consequently, a conductive paste layer 14 is formed at the second end portion 12B of the electronic component main body 10.

### 3.3. Paste removing process

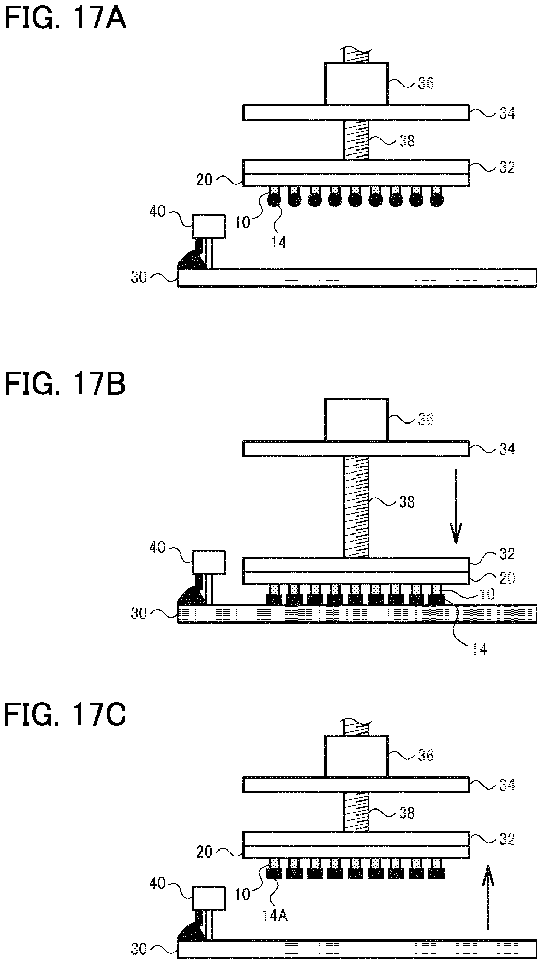

FIG. 17A to FIG. 17C illustrate the paste removing process (a blot process). FIG. 17A illustrates a process for horizontally moving the blade 44, which is lowered to come into contact with the surface 31 of the surface plate 30, with the squeegee unit 40 to scrape off the conductive paste on the surface plate 30. In FIG. 17B, the electronic component main body 10 is lowered by the movable board 32 to bring the conductive paste layer 14 formed at the second end portion 12B of the electronic component main body 10 into contact with the surface plate 30. Thereafter, the electronic component main body 10 is raised by the movable board 32. Consequently, extra paste at the second end portion 12B of the electronic component main body 10 is transferred to the surface plate 30 and a flattened conductive paste layer 14A is formed. Note that, if the paste removing process described in JP-B-6633829, JP-B-6787605, PCT/JP2020/010448, or the like proposed by the present applicant is used instead of the conventional paste removing process illustrated in FIG. 17A to FIG. 17C, the conducive paste layer 14A is further improved.

### 3.4. Details of the prepress process

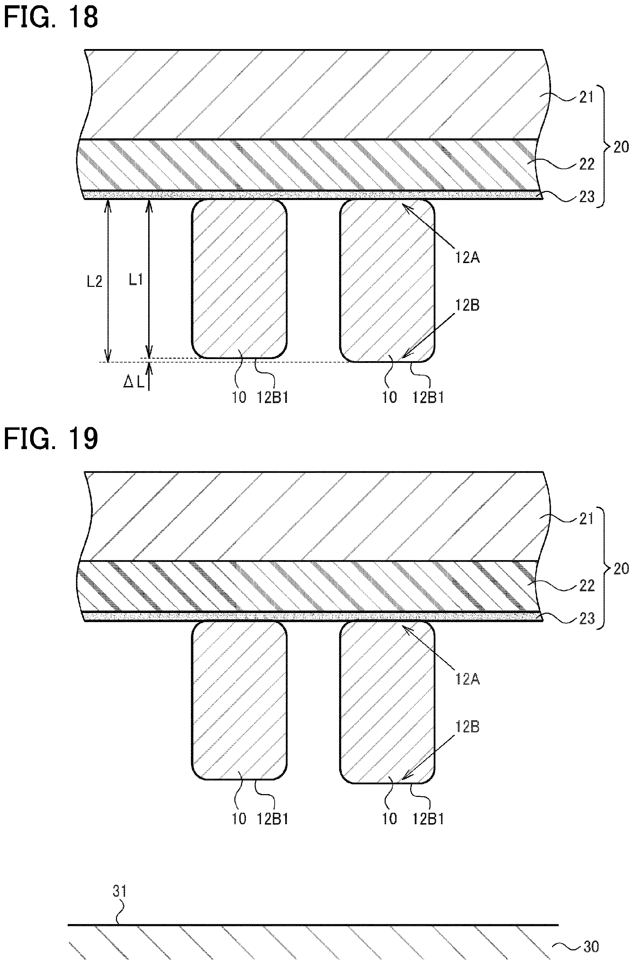

Subsequently, details of the prepress process according to the embodiment is explained with reference to FIG. 18 to FIG. 21. In FIG. 18, the jig 20 further includes a flat material 22 between the base material 21 and the adhesive layer 23. The base material 21 is a rigid body having shape retainability and is detachably supported by the movable board 32 illustrated in FIG. 15A and the like. The base material 21 also functions as a supporting section that supports the flat material 22. The base material 21 and the flat material 22 are disposed in parallel to the front surface 31 of the surface plate 30. The flat material 22 can be, for example, shape memory resin. When the shape memory resin 22 does not have an adhesive function, the adhesive layer 23 is formed on an exposed surface of the shape memory resin 22. The first end portion 12A of the electronic component main body 10 is stuck to the adhesive layer 23.

The shape memory resin 22 is formed by a two-phase structure including a "fixed phase" in which a shape of a molded product at the time when the shape memory resin is molded in a die is fixed and a "reversible phase" in which softening and hardening reversibly occur according to a temperature change. In the present specification, the fixed phase is referred to as shape memory state, one side of the reversible phase is referred to as softening state, and the other side of the reversible phase is referred to as hardening state. A shape in the fixed phase is referred to as primary shaping and a shape at the time of hardening after softening is referred to as secondary shaping. The shape memory resin 22 is molded in a shape of the primary shaping through a cooling process after heating and melting resin supplied in a powder state or a pellet state and injecting the resin in a die or the like and shaping the resin. When the primarily shaped shape memory resin 22 is deformed into any shape at an appropriate secondary shaping temperature and cooled at a room temperature while stress is kept applied, the shape memory resin 22 is fixed in the shape of the secondary shaping. When the secondarily shaped shape memory resin 22 is heated to the appropriate temperature again, the shape memory resin 22 recovers to the shape at the time when the shape memory resin 22 is primarily shaped. The shape memory resin is described in, for example, a color material, 63[6]353-359, 1990.

### 3.4.1. First step in the prepress process

FIG. 18 illustrates a first step in the prepress process. This step is the same as the step immediately after the plurality of electronic component main bodies 10 are delivered to the conveying jig 20. In the first step, the first end portion 12A of the electronic component main body 10 is stuck to the adhesive layer 23 of the jig 20. Note that the positioning jig assembly 50 that aligns and holds the plurality of electronic component main bodies 10 is used to collectively stick the plurality of electronic component main bodies 10 to the adhesive layer 23 of the jig 20. Here, the shape memory resin 22 used in this embodiment is commercially available Jmade shape memory plastic (a surface shape retaining type, the thickness of a flat plate is 0.4 mm, a shape recovery temperature is 60°C). In the first step implemented with the shape memory resin 22 set to the normal temperature, the shape of the shape memory resin 22 is a primarily-shaped flat plate (a shape memory state) having 0.4 mm thickness. The plurality of electronic component main bodies 10 held by the jig 20 sometimes have different lengths L1 and L2 from the adhesive layer 23 to the end face 12B1 and have variation Δ=L2-L1. In this case, the positions of the end faces 12B1 of two electronic component main bodies 10 are not aligned.

### 3.4.2. Second step in the prepress process

FIG. 19 illustrates a second step in the prepress process. In the second step, the jig 20 is relatively moved with respect to the surface plate 30. In FIG. 19, the jig 20 is lowered with respect to the fixed surface plate 30. In this second step as well, the shape of the shape memory resin 22 is the primarily-shape flat plate (the shape memory state) having 0.4 mm thickness.

### 3.4.3. Third step and fourth step in the prepress process.

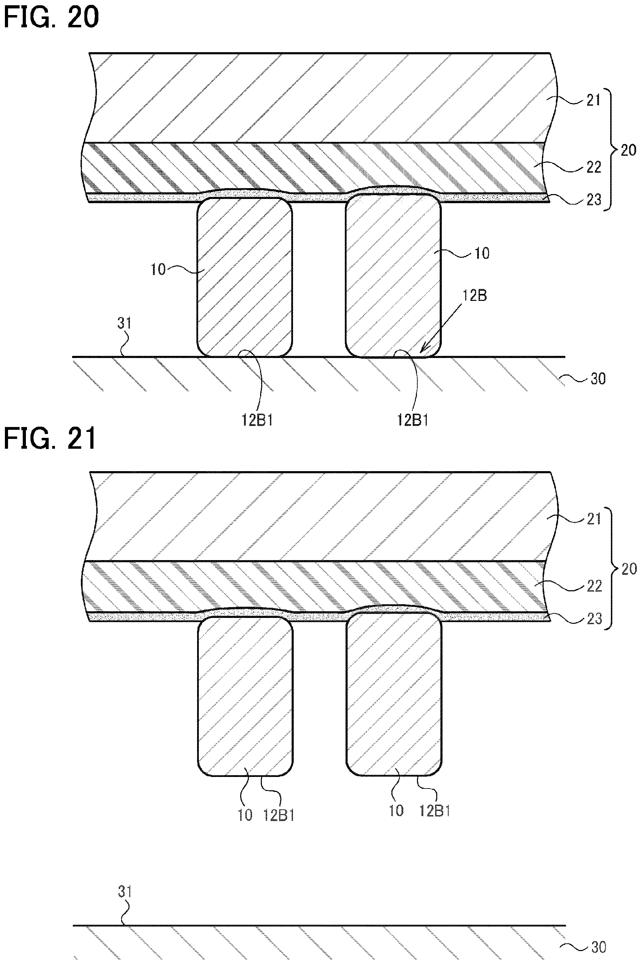

FIG. 20 illustrates a third step and a fourth step in the prepress process. In the third step, the shape memory resin 22 is heated at, for example, 70 to 120°C higher than the glass transition point to be changed to a softened state. The second end portion 12B of the electronic component main body 10 is set in contact with the surface plate 30 for a predetermined time. A softening temperature can be set to be the glass transition point or higher and lower than the melting point. Consequently, the shape memory resin 22 and the adhesive layer 23 can be pressurized and deformed. The shape of the shape memory resin 22 is the secondary shaping. Note that forced heating of the shape memory resin 22 may be started during the second step. In the fourth step, while the second end portion 12B of the electronic component main body 10 is kept in contact with the surface plate 30, the shape memory resin 22 is, for example, forcibly cooled from a range of temperature lower than the glass transition point to the normal temperature to be changed to a hardened state. The shape memory resin 22 is hardened while being kept in the secondary shaping. By implementation of the third step and the fourth step, the position of the end face 12B 1 of the second end portion 12B of the electronic component main body 10 can be aligned in flash with the surface of the surface plate 30.

### 3.4.4. Fifth step in the prepress process

FIG. 21 illustrates a fifth step in the prepress process. In the fifth step, the jig 20 is relatively moved with respect to the surface plate 30 to separate the electronic component main body 10, the position of the end face 12B1 of which is aligned, from the surface plate 30. Consequently, the prepress process is completed. Note that, in FIG. 21, the jig 20 is raised with respect to the fixed surface plate 30. The fifth step can be implemented with the secondarily-shaped shape memory resin 22 set to the normal temperature.

### 3.4.5 Detaching process for the electronic component main body from the conveying jig

After the completion of the prepress process, the coating process explained above is implemented and, according to necessity, the paste removing process is implemented. In any case, when treatment to, for example, one end face of the electronic component main body 10 held by the jig 20 is completed, the electronic component main body 10 is detached from the conveying jig 20. Differently from this, when treatment to both end faces of the electronic component main body 10 held by the second conveying jig 90 is completed, the electronic component main body 10 is detached from the second conveying jig 90. Accordingly, in the detaching process, the shape memory resin 22 is deformed into a state in which the electronic component main body 10 can be detached from the jig 20 or 90, that is, a shape retaining state other than the shape (the second shaping) of the softened state and the hardened state. In the case of the shape memory resin 22, the shape memory resin 22 can recover to the primary shaping as the shape retaining state other than the secondary shaping. The shape memory resin 22 is heated again to a shape recovery temperature, for example, 60°C or higher to recover from the secondary shaping to the primary shaping to be a flat plate. Consequently, since the adhesive layer 23 is also flattened, the electronic component main body 10 can be easily detached from the adhesive layer 23. Note that, when the seventh step illustrated in FIG. 14 is implemented, if both of the first and second conveying jigs 20 and 90 include the shape memory resin 22, it is unnecessary to set the adhesive force of the second adhesive layer 93 larger than the adhesive force of the first adhesive layer 23. When the seventh step illustrated in FIG. 14 is implemented, the shape memory resin 22 of the first conveying jig 20 only has to be recovered to the primary shaping.

Here, the first and second conveying jigs 20 and 90 may be conveying jigs that do not always include the shape memory resin 22 and stick the end face of the electronic component main body 10 to the adhesive layers 23 and 93. In this case, it is necessary to set the adhesive force of the second adhesive layer 93 larger than the adhesive force of the first adhesive layer 23.

### 4. Manufacturing method for a chip three-terminal capacitor

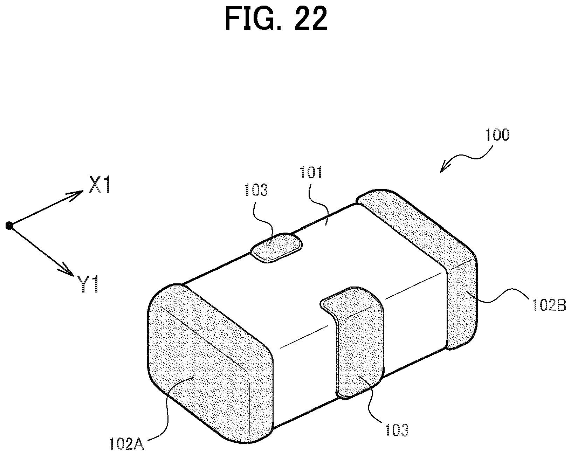

FIG. 22 illustrates an electronic component 100 that is, for example, a chip three-terminal capacitor. The electronic component 100 includes two-terminal through-electrodes 102A and 102B disposed at both end portions in the longitudinal direction X1 of an electronic component main body 101 and two ground electrodes 103 disposed at both end portions in the latitudinal direction Y1 of the electronic component main body 101.

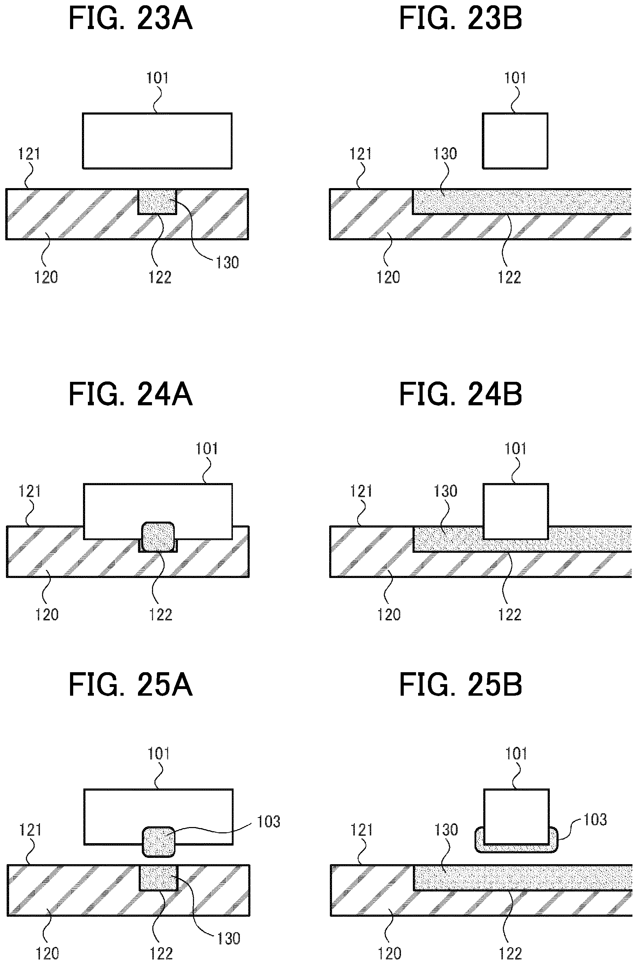

Here, whereas the through-electrodes 102A and 102B are formed by the coating process illustrated in FIG. 16A to FIG. 16C, the ground electrodes 103 are locally formed by, for example, intaglio printing illustrated in FIG. 23A to FIG. 25B at the end portion in the latitudinal direction Y1 in a position where the length in the longitudinal direction X1 of the electronic component main body 101 is divided into two. First, in a first step illustrated in FIGS. 23A and 23B, a dip layer 130 of paste is formed in a groove 122 drilled in a principal plane 121 of a dip layer forming section, for example, a rubber plate 120. Subsequently, in a second step illustrated in FIGS. 24A and 24B, for example, the electronic component main body 101 held by the jig 20 illustrated in FIG. 17 is relatively moved with respect to the rubber plate 120 and compresses and deforms the rubber plate 120, whereby the electronic component main body 101 is locally immersed in the dip layer 130 in the groove 122. Thereafter, in a third step illustrated in FIGS. 25A and 25B, the electronic component main body 101 held by the jig 20 illustrate in FIG. 17 is relatively moved with respect to the rubber plate 120 and contact of the electronic component main body 101 and the rubber plate 120 is released. Consequently, as illustrated in FIG. 22, the ground electrodes 103 are locally formed at both the end portions in the latitudinal direction Y1 of the electronic component main body 101.

Before the steps illustrated in FIG. 23A to FIG. 25B are implemented, the electronic component main body 101 is positioned by the positioning jig assembly 50 illustrated in FIG. 1 and, thereafter, delivered to the conveying jig 20. The steps illustrated in FIG. 23A to FIG. 25B are simultaneously implemented for a plurality of electronic component main bodies 101 positioned and held by the conveying jig 20. At this time, one end portion in the latitudinal direction Y of the electronic component main body 101 is press-fit and positioned in the hole 63 of the positioning jig assembly 50 illustrated in FIG. 1 and, thereafter, the other end portion in the latitudinal direction Y1 of the electronic component main body 101 is stuck to the adhesive layer 23 of the conveying jig 20. The hole 63 of the positioning jig assembly 50 includes the slits 64 in the position where the length in the X-axis direction (coinciding with the longitudinal direction X1 in FIG. 22) is divided into two as illustrated in FIG. 5 and FIG. 6. Therefore, the ground electrodes 103 can be accurately formed in a position where the length in the longitudinal direction X1 of the electronic component main body 101 is divided into two.

### 5. Modification of the positioning jig

### 5.1. Positioning jig having a three-layer structure

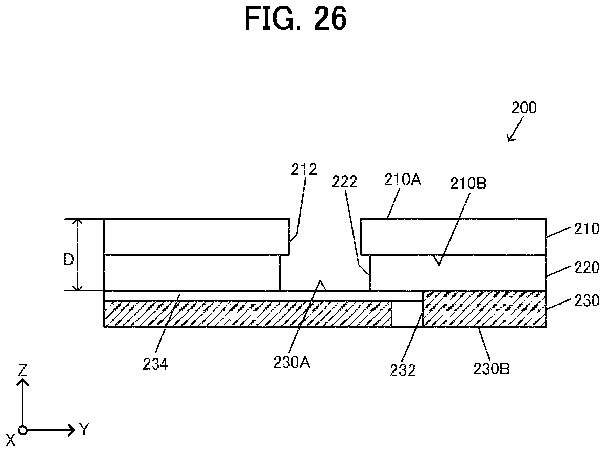

FIG. 26 is a sectional view of a positioning main body (a positioning jig) 200 that can be used instead of the positioning main body (the positioning jig) 60 illustrated in FIG. 1. The positioning main body 200 illustrated in FIG. 26 includes an elastic body, for example, a rubber plate 210, a supporting body 220 that supports the rubber plate 210, and a substrate 230 on which the supporting body 220 is loaded. Whereas the positioning main body 60 illustrated in FIG. 1 has a two-layer structure of the substrate 61 and the elastic body 62, the positioning main body 200 illustrated in FIG. 26 is different in that the positioning main body 200 has a three-layer structure. Note that, in the positioning main body 200, at least the elastic body 210 may also be used as a conveying jig that holds and conveys the electronic component main body 10.

Like the rubber plate 62 illustrated in FIG. 2, the rubber plate 210 includes a plurality of through-holes 212 opened in a first surface 210A. The through-hole 212 can be set to the same dimension as the dimension of the hole 63 illustrated in FIG. 5 and FIG. 6. The slits 64 communicating with the through-hole 212 can be formed according to necessity.

The supporting body 220 is a rigid body, for example, a Bakelite plate. A second surface 210B of the rubber plate 210 is joined on the supporting body 220 by bonding, welding, adhesion, or the like. Note that surfaces to be joined of the rubber plate 210 and the supporting body 220 may be subjected to surface treatment. The supporting body 220 includes a plurality of through-holes 222 communicating with the plurality of through-holes 212 of the rubber plate 210. The shape of the through-hole 222 does not matter if the through-hole 222 communicates with at least one through-hole 212 and has a size through which the electronic component main body 10 is inserted. The through-hole 212 and the through-hole 222 may be formed in a 1:1 relation. However, one through-hole 222 communicating with two or more through-holes 212 may be formed. That is, when N is a natural number, one through-hole 222 communicates with N through-holes 212.

Here, as illustrated in FIG. 26, total depth D of the through-hole 212 and the through-hole 222 coincides with the depth of the hole 63 of the positioning main body 60 illustrated in FIG. 1. That is, the hole 63 illustrated in FIG. 1 is equivalent to the holes 212 and 222 illustrated in FIG. 26. In FIG. 26, the electronic component main body 10 is positioned and held by, of the through-holes 212 and 222 having the depth D, the through-hole 212 of the rubber plate 210 on a surface layer side. Note that the thicknesses of the rubber plate 210 and the supporting body 220 having the total thickness D is optional. However, in order to secure a holding force for the electronic component main body 10, the rubber plate 210 can be formed thicker than the supporting body 220.

A reason for providing the supporting body 220 is as follows. In a state of a single unit before being stacked on the rubber plate 210, the plurality of through-holes 222 are, for example, machined. Dimension accuracy of the through-hole 222 may be low. Subsequently, in a state in which the rubber plate 210 is joined on the supporting body 220, the plurality of through-holes 212 are formed in the rubber plate 210. The through-hole 212 requested to have higher dimension accuracy than the through-hole 222 is formed by, for example, laser machining. At that time, rubber small pieces removed by the laser can be dropped downward via the through-hole 222 formed in advance in the supporting body 220. By providing the supporting body 220 in this way, the through-hole 212 of the rubber plate 210 is easily machined.

A laminated body of the rubber plate 210 and the supporting body 220 is loaded on the substrate 230. The supporting body 220 and the substrate 230 are joined by bonding, welding, adhesion, or the like. Consequently, the positioning main body 200 can include the bottomed holes 212 and 222 having the principal plane of the substrate 230 as bottom surfaces. Note that surfaces to be joined of the supporting body 220 and the substrate 230 may be subjected to surface treatment. The holes 212 and 222 illustrated in FIG. 26 are equivalent to the hole 63 illustrated in FIG. 1 in that the holes 212 and 222 are bottomed holes having the depth D. Accordingly, the positioning method and the like explained above can also be implemented by configuring the positioning jig assembly using the positioning main body 200 illustrated in FIG. 26 instead of the positioning main body 60 illustrated in FIG. 1.

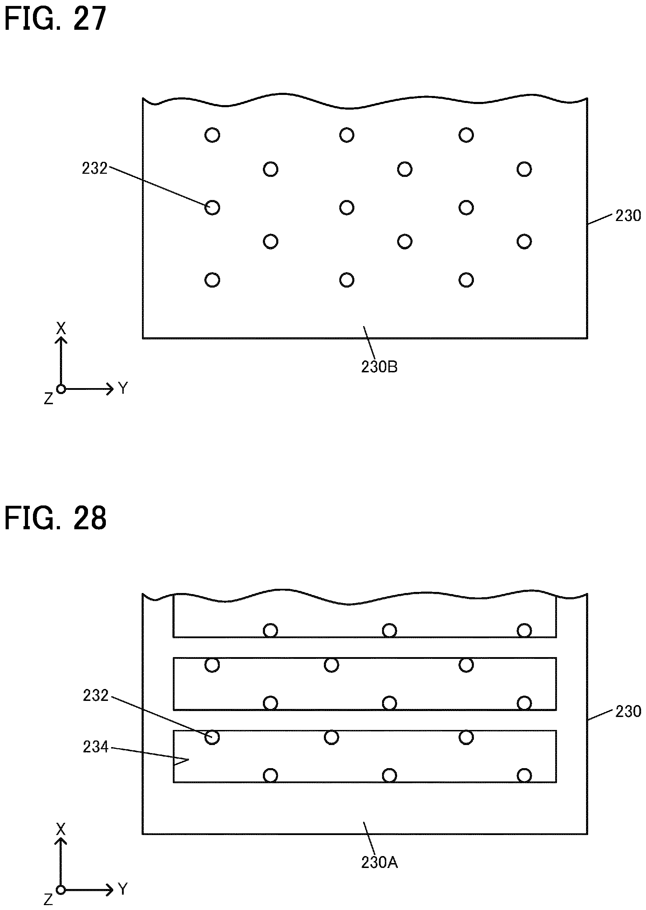

The substrate 230 may not only function as a base material for the laminated body of the rubber plate 210 and the supporting body 220 but also form a vacuum suction passage communicating with the through-holes 212 and 222. Therefore, a plurality of vacuum suction holes 232 are opened in a rear surface 230B (a surface not joined to the supporting body 220) of the substrate 230 illustrated in FIG. 27. On a front surface 230A (a surface joined to the supporting body 220) of the substrate 230 illustrated in FIG. 28, a plurality of rectangular recesses 234 communicating with at least one vacuum suction hole 232 and having, for example, longitudinal sides as the X direction are formed at interval in, for example, the Y direction. The plurality of vacuum suction holes 232 and the plurality of recesses 234 are examples of the vacuum suction passage formed in the substrate 230. As illustrated in FIG. 28, the plurality of vacuum suction holes 232 are disposed in one recess 234 in positions where the inside of one recess 234 can be equally sucked. The supporting body 220 is joined to, via an adhesive or the like, a peripheral edge region excluding the plurality of recesses 234 in the surface 230A of the substrate 230.

The plurality of vacuum suction holes 232 in the rear surface 230B of the substrate 230 can be coupled to a not-illustrated vacuum suction apparatus. The vacuum suction apparatus is connected to the plurality of vacuum suction holes 232 in the rear surface 230B of the substrate 230 when the supporting body 220 is joined to the front surface 230A of the substrate 230 to assemble a positioning jig assembly. At this time, the plurality of through-holes 212 of the rubber plate 210 are sucked in vacuum in a state in which the plurality of through-holes 212 are covered and an air escape path is closed. Then, a surface to which an adhesive is not applied in the front surface 230A of the substrate 230 can be brought into close contact with the supporting body 220 by vacuum suction. In this way, it is possible to prevent a gap from occurring between not-bonded surfaces at the time of the joining of the substrate 230 and the supporting body 220.

The vacuum suction apparatus is also connected to the plurality of vacuum suction holes 232 in the rear surface 230B of the substrate 230, for example, at the time of the positioning process for the electronic component main body 10 illustrated in FIG. 7 to FIG. 9, in particular, FIG. 7. Then, when the electronic component main body 10 is guided to the first through-hole 71 of the first guide body 70 as illustrated in FIG. 7, the electronic component main body 10 can be sucked in vacuum simultaneously with vibrating the positioning jig assembly. Then, it is possible to reliably guide the electronic component main body 10 to the first through-hole 71 of the first guide body 70. In particular, it is possible to eliminate the first through-hole 71 to which the electronic component main body 10 is not guided. In the processes illustrated in FIG. 8 to FIG. 9 as well, when the electronic component main body 10 is sucked in vacuum, it is possible to reliably bring the electronic component main body 10 into contact with the bottom surface of the hole 63. Consequently, it is possible to uniformize a projecting height of the electronic component main body 10 from the hole 63.

Note that the vacuum suction hole 232 and the recess 234 illustrated in FIG. 27 and FIG. 28 may be formed in the substrate 61 illustrated in FIG. 1. Then, even in the positioning jig assembly illustrated in FIG. 1, it is possible to use the vacuum suction at the time of the assembly and at the time of the positioning process.

### 5.2. Coating of the holes

It is preferable to coat, with a coating agent, in particular, fluorocarbon resin, parts that come into contact with the electronic component main body 10, in particular, the inner surface of the through-hole 212 of the rubber plate 210 and the surface 230A of the substrate 230 (the bottom surface of the hole). The inner surface of the through-hole 222 of the supporting body 220 may be coated. As the fluorocarbon resin, for example, polytetrafluoroethylene (PTFE: Teflon (registered trademark)) is suitable. Besides, tetrafluoroethylene-perfluoroalkylvinylether copolymer (PFA), tetrafluoroethylene hexafluoropropylene copolymer (FEP), tetrafluoroethylene-ethylene copolymer (ETFE), polyvinylidene fluoride (PVDF), or polychlorotrifluoroethylene (PCTFE) may be used.

It is likely that the inner surfaces of the through-hole 212 of the rubber plate 210 and the through-hole 222 of the supporting body 220 are machined into rough surfaces and damage the electronic component main body 10. It is likely that, if the surface 230A of the substrate 230 is, for example, metal or the like, the surface 230A is hard and damages the electronic component main body 10. By coating a contact surface with the electronic component main body 10 with, in particular, fluorocarbon resin, it is possible to form the contact surface as a contact surface that is flat, relatively soft, and high in durability. In this way, it is possible to prevent the electronic component main body 10 from being damaged.

The inner surface of the hole 63 of the rubber plate 62 illustrated in FIG. 1 and the surface of the substrate 61 illustrated in FIG. 1 can be coasted with the fluorocarbon resin. When the hole 63 illustrated in FIG. 1 or the through-hole 212 of the rubber plate 210 illustrated in FIG. 26 includes the slits 64 illustrated in FIG. 5 and FIG. 6, it is unnecessary to coat the slits 64 with the fluorocarbon resin. This is because, although there is a reason that it is difficult to coat the slits 64, the slits 64 facilitate elastic deformation of the holes 63 and 21 in the first place and do not come into contact with the electronic component main body 10.

### 6. Modification of the elastic body (the positioning jig)

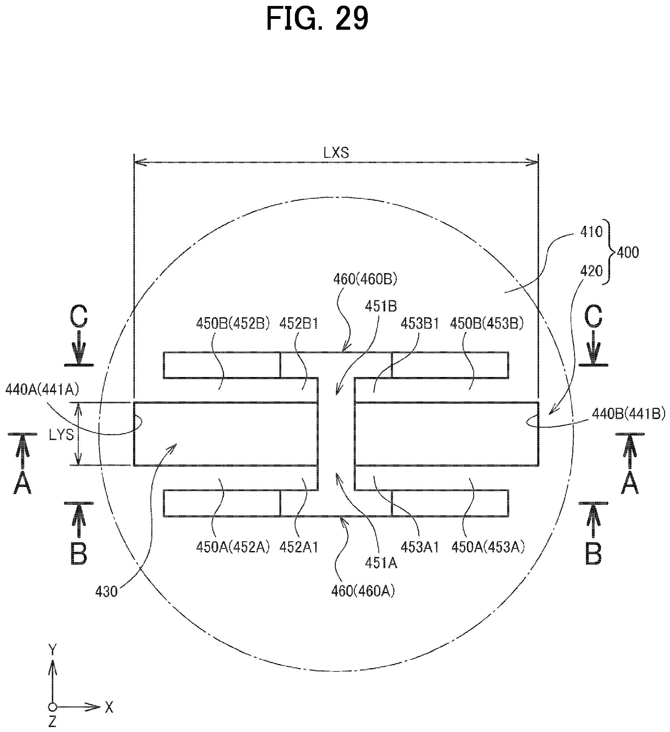

Subsequently, a modification of the elastic body (the rubber plate) 62 illustrated in FIG. 2 is explained with reference to FIG. 29 to FIG. 34. Note that a positioning jig 400 explained below is used instead of the elastic body 62 of the positioning jig assembly 50 and, besides, may be used as a part of another positioning assembly or as a single unit.

The positioning jig 400 includes an elastic body, for example, a rubber plate 410 and a holding section 420 cut out and formed in a depth direction from a front surface 410A of the rubber plate 410, the electronic component main body 10 being elastically held by the holding section 420. The holding section 420 includes a space section 430, two first contact sections 440A and 440B, two second contact sections 450A and 450B, and a clearance section 460. The two first contact sections 440A and 440B and the two second contact sections 450A and 450B define the space section 430. The space section 430 is equivalent to the hole 63 illustrated in FIG. 2 that is elastically deformed to be capable of positioning and holding the electronic component main body 10. Note that the space section 430 may not pierce through the holding section 420.

The electronic component main body 10 is disposed in the space section 430. When directions orthogonal in an XY plane parallel to the front surface 410A of the rubber plate 410 are represented as a first direction X and a second direction Y, in a planar view from the Z direction orthogonal to the XY plane, for example, in the space section 430 having a rectangular shape, length LXS in the first direction X is larger than length LYS in the second direction Y (same as the lengths illustrated in FIG. 4 to FIG. 6) according to the shape of a press-fit section of the electronic component main body 10. The two first contact sections 440A and 440B come into contact with, from both sides in the first direction X, the electronic component main body 10 disposed in the space section 430. The two second contact sections 450 come into contact with, from both sides in the second direction Y, the electronic component main body 10 disposed in the space section 430. The clearance section 460 is adjacent to at least one of the two second contact sections 450A and 450B and formed by cutting out the rubber plate 410 and forms a clearance space for allowing at least one of the two second contact sections 450A and 450B to be elastically deformed. That is, the clearance section 460 functions as an elastic deformation allowing section.

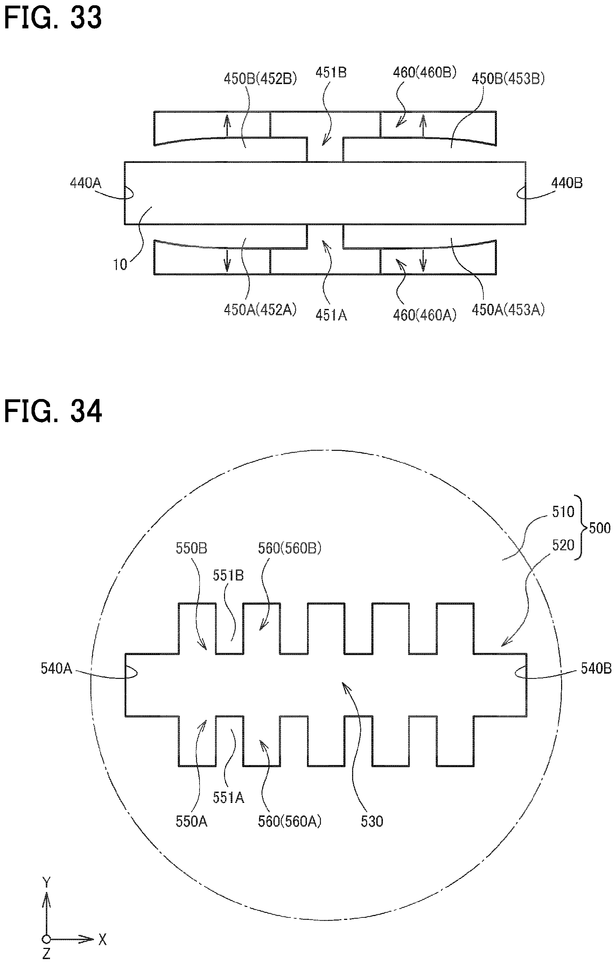

According to this embodiment, as illustrated in FIG. 33, when the electronic component main body 10 is press-fit in the space section 430, the electronic component main body 10 is positioned in the first direction X and the second direction Y in the space section 430. That is, the electronic component main body 10 is positioned in the first direction X by the two first contact sections 440A and 440B and is positioned in the second direction Y by the two second contact sections 450A and 450B.

At this time, at least one of the two second contact sections 450A and 450B is displaced to the clearance section 460 and elastically deformed. Consequently, at least one of the two second contact sections 450A and 450B is easily elastically deformed. In this way, an excessive press-fit force is unnecessary, a load acting on the electronic component main body 10 can be reduced, and a press-fit failure of the electronic component main body 10 is reduced even with a proper press-fit force. Damage that the rubber plate 410 suffers at the press-fit time can be reduced. A product life can be extended.

The length in the first direction X of a region where the clearance section 460 is formed may be smaller than the first length LXS of the space section 430 as illustrated in FIG. 29. This is because, even if the clearance section 460 is not formed over the entire length in the first direction X of the space section 430, elastic deformation of at least one of the two second contact sections 450A and 450B is allowed. Note that the length in the first direction X of the region where the clearance section 460 is formed may be equal to or larger than the first length LXS of the space section 430.

The two first contact sections 440A and 440B can include two first inner wall sections 441A and 441B facing each other in the first direction X across the space section 430 as illustrated in FIG. 29. Note that the first inner wall sections 441A and 441B may not be in contact over the entire width in the second direction Y of the electronic component main body 10. In short, the first inner wall sections 441A and 441B only have to be able to position the electronic component main body 10 in the first direction X.

On the other hand, the two second contact sections 450A and 450B include two second inner wall sections facing each other in the second direction Y across the space section 430. The two second inner wall sections may be in contact over the entire width in the second direction Y of the electronic component main body 10. However, in this embodiment, slits 451A and 451B are formed in the centers in one direction of the two second inner wall sections to provide four second inner wall sections 452A, 452B, 453A, 453B in total. The slits 451A and 451B have the same function as the function of the slits 64, 64 illustrated in FIG. 5 and FIG. 6. A dimensional relation between the electronic component main body 10 and the space section 430 may be set the same as the dimensional relation illustrated in FIG. 6.

The clearance section 460 can include at least one of a first clearance section 460A and a second clearance section 460B. In this embodiment, both of the first clearance section 460A and the second clearance section 460B are provided. In a planar view illustrated in FIG. 29, the two inner wall sections 452A and 453A are disposed between the first clearance section 460A and the space section 430 and the two second inner wall sections 452B and 453B are disposed between the second clearance section 460B and the space section 430.

By forming the slits 451A and 451B, the space section 430 and the clearance section 460 (460A and 460B) communicate in the planar view. Then, the four second inner wall sections 452A, 452B, 453A, and 453B include four free end portions 452A1, 452B1, 453A1, and 453B1 in the planar view. Therefore, the free end portions 452A1, 452B1, 453A1, and 453B1 are more easily elastically deformed. Note that the clearance sections 460, 460 communicating with the slits 64, 64 illustrated in FIG. 5 and FIG. 6 in the planar view may be disposed on both sides of the space section 430.

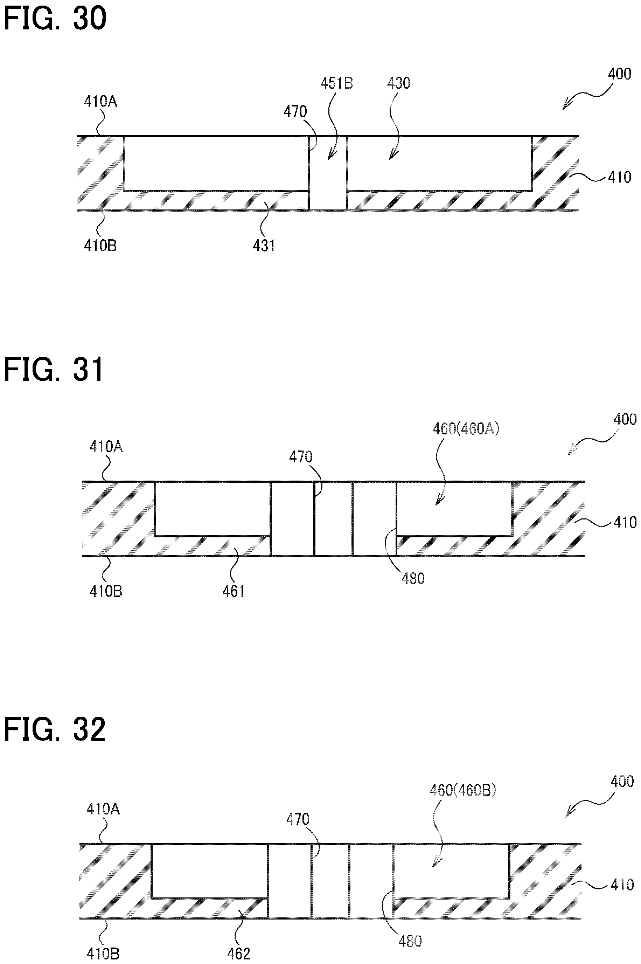

As illustrated in FIG. 30 that is an A-A cross section of FIG. 29, for example, the space section 430 is opened in the front surface 410A of the rubber plate 410 but does not pierce through the rubber plate 410 to a rear surface 410B and has a bottom wall 431. Similarly, as illustrated in FIG. 31 that is a B-B cross section of FIG. 29 and FIG. 32 that is a C-C cross section of FIG. 29, the clearance sections 460A and 460B are opened in the front surface 410A of the rubber plate 410 but does not pierce through the rubber plate 410 to the rear surface 410B and includes bottom walls 461 and 462. However, as illustrated in FIG. 30 to FIG. 32, a through-hole 470 piercing through the rubber plate 410 from the front surface 410A to the rear surface 410B of the rubber plate 410 is formed over the width in the first direction X in which the slits 451A and 451B are formed. As illustrated in FIG. 31 and FIG. 32, in the first clearance section 460A and the second clearance section 460B, for example, a through-hole 480 piercing through the rubber plate 410 from the front surface 410A to the rear surface 410B of the rubber plate 410 is formed over width equal to or larger than the width in the first direction X in which the slits 451A and 451B are formed. By forming the through-holes communicating with the space section 430, the clearance section 460, and the slits 451A and 451B in the planar view in this way, the four second inner wall sections 452A, 452B, 453A, and 453B include the four free end portions 452A1, 452B1, 453A1, and 453B1 in a stereoscopic view. The four free end portions 452A1, 452B1, 453A1, and 453B1 are more easily elastically deformed. Note that the through-holes 470 and 480 may be formed only in regions where the four free end portions 452A1, 452B1, 453A1, and 453B1 are easily elastically deformed, for example, around the free end portions or may be formed in the entire regions of the space section 430 and the clearance section 460 (460A and 460B).

FIG. 34 is a partial plan view of a positioning jig 500 including an elastic body, for example, a rubber plate 310 and a holding section 520 having a shape different from the shape of the holding section 420 illustrated in FIG. 29. The holding section 520 includes a space section 530, two first contact sections 540A and 540B, two second contact sections 550A and 550B, and a clearance section 560. The two first contact sections 540A and 540B and the two second contact sections 550A and 550B define the space section 530.

The two first contact sections 540A and 540B are in contact with, from both sides in the first direction X, the electronic component main body 10 disposed in the space section 530. The two second contact sections 550A and 550B are in contact with, from both sides in the second direction Y, the electronic component main body 10 disposed in the space section 530. Here, the two second contact sections 550A and 550B locally include at least two, for example, eight second inner wall sections 551A and 551B in total facing each other in the second direction Y across the space section 530.

In FIG. 34 as well, the space section 530 and the clearance section 560 communicate in the planar view. In FIG. 34, in the planar view, clearance sections 560A are disposed on both sides of the second inner wall section 551A in the first direction X and clearance sections 560B are disposed on both sides of the second inner wall section 551B in the first direction X. Then, the at least two second inner wall sections 551A and 551B include at least two free end portions 551A1 and 551B1 facing each other across the space section 530 on the planar view. Since the free end portions 551A1 and 551B1 can be displaced to the clearance sections 560A and 560B on both sides of the free end portions 551A and 551B1, the free end portions 551A1 and 551B1 are more easily elastically deformed.

Note that, in FIG. 34 as well, through-holes piercing through a rubber plate 510 from the front surface to the rear surface of the rubber plate 510 may be formed locally or in the entire regions of the space section 530 and/or the clearance section 560 (560A and 560B). In this case, through-holes may be formed around the at least two free end portions 551A1 and 551B1.

### REFERENCE SIGN LIST

10 ELECTRONIC COMPONENT MAIN BODY
12A FIRST END PORTION
12B SECOND END PORTION
12B1 END FACE
14, 14A PASTE LAYER
20, 90 CONVEYING JIG
21, 91 BASE MATERIAL
22 FLAT MATERIAL (SHAPE MEMORY RESIN)
23, 93 ADHESIVE LAYER
50 POSITIONING JIG ASSEMBLY
60 POSITIONING MAIN BODY
61 SUBSTRATE
62 ELASTIC BODY (RUBBER PLATE)
62A FIRST SURFACE
63 HOLE
70 FIRST GUID BODY
71 FIRST THROUGH-HOLE
80 SECOND GUIDE BODY
81 SECOND THROUGH-HOLE
100 ELECTRONIC COMPONENT (CHIP THREE-TERMINAL CAPACITOR)
101 ELECTRONIC COMPONENT MAIN BODY
102A, 102B THROUGH-ELECTRODE
103 GROUND ELECTRODE
200 POSITIONING MAIN BODY (POSITIONING JIG)
210 ELASTIC BODY
210A FIRST SURFACE
210B SECOND SURFACE
212 THROUGH-HOLE
220 SUPPORTING BODY
222 THROUGH-HOLE
230 SUBSTRATE
232, 234 VACUUM SUCTION PASSAGE
400 POSITIONING JIG
410 RUBBER PLATE
410A FRONT SURFACE
410B REAR SURFACE
420 HOLDING SECTION
430 SPACE SECTION
440A, 440B FIRST CONTACT SECTION
450A, 450B SECOND CONTACT SECTION
451A, 451B SLITS
452A, 452B, 453A, 453B SECOND INNER WALL SECTION
452A1, 452B1, 453A1, 453B1 FREE END PORTION
460 CLEARANCE SECTION
460A, 460B CLEARANCE SECTION
470, 480 THROUGH-HOLE
500 POSITIONING JIG
510 RUBBER PLATE
520 HOLDING SECTION
530 SPACE SECTION
540A, 540B FIRST CONTACT SECTION
550A, 550B SECOND CONTACT SECTION
551A, 551B SECOND INNER WALL SECTION
551A1,551B1 FREE END PORTION
600 PRESS PLATE
610 PRESS APPARATUS
620 RISING AND FALLING BOARD
630 PRESSING SECTION
640 SUCTION PAD
D DEPTH OF HOLE 63
H HEIGHT IN FIRST DIRECTION Z OF ELECTRONIC COMPONENT MAIN BODY 10
L1 LENGTH IN FIRST DIRECTION Z OF FIRST THROUGH-HOLE 71
L2 LENGTH IN FIRST DIRECTION Z OF SECOND THROUGH-HOLE 81
LXE LENGTH IN X-AXIS DIRECTION OF ELECTRONIC COMPONENT MAIN BODY 10
LXG LENGTH IN X-AXIS DIRECTION OF FIRST THROUGH-HOLE 71
LXR LENGTH IN X-AXIS DIRECTION OF HOLE 63
WYE WIDTH IN Y-AXIS DIRECTION OF ELECTRONIC COMPONENT MAIN BODY 10
LXG WIDTH IN Y-AXIS DIRECTION OF FIRST THROUGH-HOLE 71
LXR WIDTH IN Y-AXIS DIRECTION OF HOLE 63
X, Y ORTHOGONAL TWO AXES OF FIRST PLANE
X FIRST DIRECTION
Y SECOND DIRECTION
Z FIRST DIRECTION
Z FIRST DIRECTION OR DEPTH DIRECTION

## Claims

1. A positioning jig assembly comprising:
a positioning main body with a plurality of holes opened on a first surface of the positioning main body, the plurality of holes elastically deformed to be capable of respectively positioning and holding a plurality of electronic component bodies to be press-fit;
a first guide body disposed to be superimposed on the positioning main body in a planar view from a first direction orthogonal to the first surface and including a plurality of first through-holes piercing through the first guide body in the first direction; and
a second guide body disposed to be superimposed on the first guide body in the planar view and including a plurality of second through-holes piercing through the second guide body in the first direction, wherein
each one of the plurality of holes, each one of the plurality of first through-holes, and each one of the plurality of second through-holes overlap one another in the planar view and communicate with one another in the first direction,
each one of the plurality of second through-holes is formed in a shape for guiding each one of the plurality of electronic component main bodies on the second guide body to each one of the plurality of first through-holes,
each one of the plurality of first through-holes is formed in a shape for provisionally positioning each one of the plurality of electronic component main bodies guided by each one of the plurality of second through-holes, and
when height in the first direction of each one of the plurality of electronic component main bodies held by the positioning main body is represented as H, lengths in the first direction of each ones of the plurality of first through-holes and the plurality of second through-holes are respectively represented as L1 and L2, and depth in the first direction of each one of the plurality of holes is represented as D,
L1<H<D+L1+L2 and D<H hold.

2. The positioning jig assembly according to claim 1, wherein, when orthogonal two axes in a surface parallel to a principal plane of the first guide body are represented as an X axis and a Y axis, length of the X axis and width of the Y axis of each one of the plurality of through-holes are represented as LXG and WYG, and length of the X axis and width of the Y axis of each one of the plurality of electronic component main bodies at a time when being held by the positioning main body are represented as LXE and WYE,
LXG>LXE and WYG>WYE and (LXG-LXE)>(WYG-WYE) or (LXG-LXE)<(WYG-WYE) hold.

3. The positioning jig assembly according to claim 2, wherein, when (LXG-LXE)>(WYG-WYE) holds, the positioning main body includes, in a position where each one of the plurality of holes is divided into two by the X axis, two slits communicating with each one of the plurality of holes and extending in parallel to the Y axis.

4. The positioning jig assembly according to claim 2, wherein, when (LXG-LXE)<(WYG-WYE) holds, the positioning main body includes, in a position where each one of the plurality of holes is divided into two by the Y axis, two slits communicating with each one of the plurality of holes and extending in parallel to the X axis.

5. The positioning jig assembly according to any one of claims 1 to 4, wherein each one of the plurality of second through-holes includes a taper surface at an opening end portion on an exposed principal plane on an opposite side of a surface on which the second guide body is superimposed on the first guide body, and a second opening area defined by the taper surface is wider than a first opening area of each one of the plurality of first through-holes.

6. The positioning jig assembly according to any one of claims 1 to 5, wherein H≈D+L1 holds.

7. The positioning jig assembly according to any one of claims 1 to 6, wherein
the positioning main body includes:
an elastic body through which the plurality of holes pierce from the first surface to be formed; and
a substrate disposed on a second surface on an opposite side of the first surface of the elastic body, and
bottom surfaces of the plurality of holes are defined by the substrate.

8. The positioning jig assembly according to any one of claims 1 to 6, wherein
the positioning main body include:
an elastic body including the first surface;
a supporting body joined to a second surface on an opposite side of the first surface of the elastic body; and
a substrate joined to the supporting body,
the plurality of holes are formed to pierce through the elastic body and the supporting body and are made elastically deformable in a portion formed in the elastic body, and
bottom surfaces of the plurality of holes are defined by the substrate.

9. The positioning jig assembly according to claim 8, wherein the substrate includes a vacuum suction passage communicating with the plurality of holes.

10. The positioning jig assembly according to any one of claims 1 to 9, wherein inner surfaces of the plurality of holes are coated with fluorocarbon resin.

11. The positioning jig assembly according to claim 7 or 8, wherein, in the substrate, at least a region defining the bottom surfaces of the plurality of holes is coated with fluorocarbon resin.

12. The positioning jig assembly according to any one of claims 7 to 9, wherein at least the elastic body is used as a conveying jig that positions and holds and conveys each of the plurality of electronic component main bodies.

13. A method of positioning a plurality of electronic component main bodies using the positioning jig assembly according to any one of claims 1 to 12, the method comprising:
a first step of vibrating the positioning jig assembly and guiding, with each one of the plurality of second through-holes, each one of the plurality of electronic component main bodies placed at random on the second guide body and introducing the each one of the plurality of electronic component main bodies into each one of the plurality of first through-holes;
a second step of detaching the second guide body from the first guide body;
a third step of pressing, in the first direction, the plurality of electronic component main bodies projecting from the plurality of first through-holes of the first guide body and press-fitting the plurality of electronic component main bodies into the plurality of holes of the positioning main body; and
a fourth step of thereafter detaching the first guide body from the positioning main body.

14. The positioning method for the electronic component main body according to claim 13, wherein the third step includes:
a step of placing a press plate on the plurality of electronic component main bodies projecting upward from the first guide body;
a step of pressing the press plate with a press apparatus and press-fitting the plurality of electronic component main bodies into the plurality of holes of the positioning main body; and
a step of thereafter removing the press plate from the first guide body.

15. The positioning method for the electronic component main body according to claim 14, wherein, in the fourth step, the first guide body is sucked by a suction pad disposed in the press apparatus, the suction pad is raised by the press apparatus, and the first guide body is detached from the positioning main body.

16. A method of attaching a plurality of electronic component main bodies to a conveying jig using the positioning jig assembly according to any one of claims 1 to 11, the method comprising:
a first step of vibrating the positioning jig assembly and guiding, with each one of the plurality of second through-holes, each one of the plurality of electronic component main bodies placed at random on the second guide body and introducing the each one of the plurality of electronic component main bodies into each one of the plurality of first through-holes;
a second step of detaching the second guide body from the first guide body;
a third step of pressing, in the first direction, the plurality of electronic component main bodies projecting from the plurality of first through-holes of the first guide body and press-fitting the plurality of electronic component main bodies into the plurality of holes of the positioning main body;
a fourth step of detaching the first guide body from the positioning main body; and
a fifth step of attaching, to an adhesive layer of the conveying jig, an end face of each of the plurality of electronic component main bodies projecting from the plurality of first through-holes of the first guide body.

17. The method of attaching the electronic component main body to the conveying jig according to claim 16, wherein
the conveying jig includes a first conveying jig and a second conveying jig,
each of the plurality of electronic component main bodies includes one end face and another end face,
in the fifth step, the one end face of each of the plurality of electronic component main bodies is attached to a first adhesive layer of the first conveying jig, and
the method further comprises:
a sixth step of, after an end of treatment on the one end face of each of the plurality of electronic component main bodies, attaching, to a second adhesive layer of the second conveying jig, the other end face of each of the plurality of electronic component main bodies attached to the first conveying jig; and
a seventh step of delivering the plurality of electronic component main bodies from the first conveying jig to the second conveying jig in a state in which the other end face of each of the plurality of electronic component main bodies is attached to the second adhesive layer having a stronger adhesive force than the first adhesive layer.

18. A positioning jig comprising:
an elastic body; and
a holding section cut out and formed in a depth direction from a front surface of the elastic body, an electronic component main body being elastically held by the holding section, wherein
the holding section includes:
a space section in which the electronic component main body is disposed, a first length of the space section in a first direction being larger than a second length of the space section in a second direction in a planar view from a direction orthogonal to the front surface of the elastic body, the first direction and the second direction being directions orthogonal in a surface parallel to the front surface of the elastic body;
two first contact sections in contact with, from both sides in the first direction, the electronic component main body disposed in the space section;
two second contact sections in contact with, from both sides in the second direction, the electronic component main body disposed in the space section; and
a clearance section adjacent to at least one of the two second contact sections and formed by cutting out the elastic body, the clearance section forming a space for allowing the at least one second contact section to be elastically deformed.

19. The positioning jig according to claim 18, wherein length in the first direction of a region where the clearance section is formed is smaller than the first length of the space section.

20. The positioning jig according to claim 18 or 19, wherein the space section and the clearance section communicate in the planar view.

21. The positioning jig according to claim 18 or 19, wherein
the two second contact sections include two second inner wall sections facing each other in the second direction across the space section,
the clearance section includes a first clearance section and a second clearance section, and
in the planar view, one of the two second inner wall sections is disposed between the first clearance section and the space section and another of the two second inner wall sections is disposed between the second clearance section and the space section.

22. The positioning jig according to claim 20, wherein
each of the two second inner wall sections includes a slit for making the second inner wall section discontinuous in the first direction, and
the space section and the clearance section communicate via the slit.

23. The positioning jig according to claim 20, wherein
the two second contact sections locally include at least two second inner wall sections facing each other in the second direction across the space section, and
the clearance section is disposed on both sides of each of the at least two second inner wall sections in the first direction in a planar view.

24. The positioning jig according to any one of claims 18 to 23, wherein at least one of the space section and the clearance section includes a through-hole piercing through the elastic body from the front surface to a rear surface of the elastic body.

25. The positioning jig according to claim 22, wherein each of the space section, the clearance section, and the slit includes through-holes piercing through the elastic body from the front surface to a rear surface of the elastic body and communicating each other in the planar view.
